# EUROPÄISCHE PATENTSCHRIFT

(11) **EP 2 550 726 B1**
(45) Veröffentlichungstag und Bekanntmachung des Hinweises auf die Patenterteilung: **05.02.2020**
(21) Anmeldenummer: 11703670.7
(22) Anmeldetag: 14.02.2011
(51) Int. Cl.: H02K 35/02, E04B 1/21

(54) **INDUKTIONSGENERATOR**
INDUCTION GENERATOR
GENERATEUR A INDUCTION

(30) Priorität: 23.03.2010 DE 102010003151
(43) Veröffentlichungstag der Anmeldung: 30.01.2013
(73) Patentinhaber: ZF Friedrichshafen AG, 88046 Friedrichshafen (DE)
(72) Erfinder: RUFF, Eduard, 91275 Auerbach (DE)
(86) Internationale Anmeldenummer: PCT/EP2011/052092
(87) Internationale Veröffentlichungsnummer: WO 2011/117022

(56) Entgegenhaltungen:
- EP-A2- 2 079 154
- DE-A1- 10 315 764
- FR-A1- 2 753 584
- GB-A- 879 938

## Beschreibung

Die vorliegende Erfindung betrifft einen Induktionsgenerator für einen Funkschalter gemäß dem Oberbegriff von Anspruch 1, insbesondere für einen Miniaturschnappschalter.

Im Stand der Technik sind zahlreiche Induktionsgeneratoren vorgeschlagen worden, welche wie vorliegend zur Verwendung in einem energieautarken Funkschalter einsetzbar sind.

Die Druckschrift DE 101 25 059 A1 zeigt z.B. einen induktiven Spannungsgenerator, welcher einen mechanischen Energiespeicher aufweist. Der Energiespeicher speichert Betätigungsenergie bis ein Umschlagpunkt erreicht ist, bei Erreichen dessen sich ein Permanentmagnet des Induktionssystems schlagartig bewegt. Infolge der Bewegung ändert sich der magnetische Fluss schlagartig, wobei der Permanentmagnet am Anfang oder am Ende der Bewegung auf den Kern aufschlägt.

Die Druckschrift US 3,693,033 zeigt einen als Taster ausgebildeten Impulsgenerator, bei welchem ein Kern eines ersten Permanentmagneten durch Bewegung des Tasters in eine Spule eintaucht. Das Magnetfeld eines weiteren Permanentmagneten hält den ersten Permanentmagneten, bis die in den Taster eingebrachte Betätigungsenergie ein schnelles Lösen und ein Eintauchen in die Spule ermöglicht, was ein kurzes Spannungssignal zur Folge hat.

Die DE 103 15 765 B4 zeigt einen elektromagnetischen Energiewandler, bei welchem ein von einer Spule umschlossenes Element relativ zu einem Permanentmagneten bewegt werden kann, wobei in einer ersten und einer zweiten Ruhelage der magnetische Fluss durch das bewegliche Element jeweils geschlossen ist. Der Energiewandler ist derart ausgebildet, dass auch infolge einer langsamen Betätigung genügend Energie zum Betrieb eines Funkschalters gewandelt wird. Dazu kann das bewegliche Element durch Betätigung zwischen erster und zweiter Stellung jeweils nach Überwindung der Magnetkräfte umklappen.

Die DE 198 52 470 A1 zeigt ein Energieerzeugungssystem, bei welchem Dauermagneten in einem Schwingkreis an einer Induktionsspulenanordnung vorbeibewegt werden.

Die EP 2 079 154 A2 zeigt einen Induktionsgenerator nach dem Oberbegriff des Patentanspruchs 1.

Die GB 879 938 A offenbart einen Induktionsgenerator mit zwei sich gegenüberliegenden ortsfesten U-förmigen Magnetelementen und einem zwischen den Magnetelementen verlaufenden schwenkbaren stabförmigen Spulenkern zur wechselnden Anlage des Spulenkerns an den Schenkelenden der Magnetelemente derart, dass bei Wechsel der Spulenkernanlage eine Spulenkernumpolung erfolgt. Ein den Magnetelementen abgewandtes Spulenkernende ist zwischen zwei in Kraftwirkungsrichtung einer Betätigungskraft zur Betätigung des Induktionsgenerators wirkende Schraubenfeder angeordnet, wobei eine der Schraubenfedern an einem Gehäuse des Induktionsgenerators abgestützt und die andere der Schraubenfedern mit einem Betätigungselement zur Betätigung des Induktionsgenerators verbunden ist.

Die FR 2 753 584 A1 zeigt einen Funkschalter mit einer Sendebaugruppe, einer Antenne und einen Induktionsgenerator.

Um einen Funkschalter wie vorliegend miniaturisierbar auszubilden, muss regelmäßig trotz einer kleinen Baugröße des Induktionssystems eine hohe elektrische Energie aus dem mechanischen Betätigungsvorgang des Schalters generiert werden. In dieser Hinsicht sind die bekannten Lösungen verbesserungsfähig.

Ausgehend hiervon liegt der vorliegenden Erfindung die Aufgabe zugrunde, einen alternativen, miniaturisierbaren Induktionsgenerator für einen Funkschalter vorzuschlagen, welcher bei einer kleinen Baugröße des Induktionssystems eine hohe Induktionsspannung bei Betätigung erzeugt.

Diese Aufgabe wird erfindungsgemäß durch die Merkmale des Anspruchs 1 gelöst.

Die Erfindung ist definiert durch einen Induktionsgenerator mit den Merkmalen des Patentanspruchs 1. Bevorzugte Ausführungsformen der Erfindung ergeben sich aus den abhängigen Ansprüchen.

Bei einer bevorzugten Ausführungsform des Induktionsgenerators ist der Bewegungsweg zwischen den Ruhestellungen derart vorgegeben, dass das Magnetelement bei einer erzwungenen Bewegung nach Verlassen der Zwischenstellung bis zur Einnahme der jeweils anderen Ruhestellung jeweils außer Anlage am Spulenkern gelangt.

Bei einer weiteren bevorzugten Ausführungsform des Induktionsgenerators ist der Bewegungsweg derart vorgegeben, dass bei Verlassen einer Ruhestellung ein Auslenken und nachfolgend ein Einlenken bei der Bewegung von der ersten in die zweite Ruhestellung und umgekehrt erfolgt.

Bei dem erfindungsgemäßen Induktionsgenerator ist der Bewegungsweg für das Magnetelement mittels einer Kurvensteuerung vorgegeben, welche mittels einem Steuerprofil und einem entlang des Steuerprofils geführten Eingriffselement gebildet ist, wobei das Steuerprofil zwischen der ersten und der zweiten Ruhestellung eine Stellung für das Magnetelement definiert, welche als metastabile oder instabile Stellung ausgebildet ist. Dabei definiert das Steuerprofil insbesondere die erste und die zweite Ruhestellung jeweils an den Enden des Bewegungswegs, wobei zwischen erster und zweiter Ruhestellung ein Bewegungsweg vorgegeben ist, der ein Auslenken des Magnetelements aus einer und ein anschließendes Einlenken in die jeweils andere Ruhestellung vorgibt.

Gemäß einer bevorzugten Ausführungsform weist das Steuerprofil der Kurvensteuerung zur Vorgabe eines eine Auslenkung und eine Einlenkung ermöglichenden Bewegungswegs zwei aufeinander zu laufende Anschrägungen auf, zwischen welchen ein Extremwert oder ein Plateau gebildet ist, derart, dass ein Auslenken und ein Einlenken eines daran geführten Eingriffselements aus einer Ruhestellung in die jeweils andere Ruhestellung ermöglicht ist.

Gemäß einer weiteren bevorzugten Ausführungsform ist das Eingriffselement mittels einer Vorspannkraft gegen das Steuerprofil gedrängt.

Bei einer weiteren bevorzugten. Ausführungsform des Induktionsgenerators ist das Magnetelement während einer erzwungenen Bewegung mittels eines entlang eines Steuerprofils geführten Eingriffselements entlang des Bewegungswegs geführt, wobei das Steuerprofil in einem als Steuerkäfig gebildeten Steuerkurventräger aufgenommen ist, wobei das Steuerprofil insbesondere als Profilnut gebildet ist.

Bei einer weiteren bevorzugten Ausführungsform des Induktionsgenerators weist das Magnetelement das Eingriffselement auf, wobei die Induktionsspule einen Steuerkurventräger aufweist, welcher das Steuerprofil der Kurvensteuerung ausbildet, wobei das Eingriffselement bei einer erzwungenen Bewegung entlang des Steuerprofils zwischen den Ruhestellungen geführt ist.

Bei noch einer weiteren bevorzugten Ausführungsform des Induktionsgenerators weist das Steuerprofil zur Definition der ersten und der zweiten Ruhestellung jeweils ein Anschlagselement auf, welches insbesondere jeweils zusammen mit einer Anschrägung des Steuerprofils einen Rastsitz für das Eingriffselement ausbildet.

Vorgeschlagen wird bevorzugt auch ein Induktionsgenerator, wobei der Induktionsgenerator einen zweiten mechanischen Energiespeicher aufweist, welcher korrespondierend mit der Bewegung des Magnetelements von der ersten Ausgangsruhestellung in die zweite Ruhestellung zunehmend Betätigungsenergie speichert, welche zur Erzwingung einer Bewegung des Magnetelements in umgekehrter Richtung freisetzbar ist, wobei der zweite mechanische Energiespeicher als ein blattförmiges Federelement oder eine Schraubenfeder ausgebildet ist.

Gemäß einer bevorzugten Ausführungsform ist das Federelement als ein L-förmiges oder bügelförmiges Betätigungselement ausgebildet.

Gemäß einer weiteren bevorzugten Ausführungsform bildet das Federelement den ersten mechanischen Energiespeicher aus, welcher zur Speicherung von Betätigungsenergie ausgebildet ist, welche zu einer mechanischen Beschleunigung der Verbringung des Magnetelements von einer in die jeweils andere Ruhestellung freisetzbar ist, sowie den zweiten mechanischen Energiespeicher, welcher zur Speicherung von Betätigungsenergie zur Erzeugung einer Rückstellkraft ausgebildet ist, wobei der zweite mechanische Energiespeicher insbesondere integral mit dem ersten mechanischen Energiespeicher gebildet ist.

Gemäß noch einer weiteren bevorzugten Ausführungsform ist der erste mechanische Energiespeicher in Form eines ersten Abschnitts des Federelements gebildet, welcher mit dem Magnetelement mittels eines Verbindungselements derart steif verbunden ist, dass ein Drehmoment und eine Kraft übertragbar sind, insbesondere mittels eines Arms, wobei mittels des Verbindungselements eine Vorspannkraft auf das Magnetelement einwirkt, insbesondere eine durch den ersten mechanischen Energiespeicher erzeugte Vorspannkraft.

Bei einer bevorzugten Ausführungsform des Induktionsgenerators ist der erste mechanische Energiespeicher in Form eines ersten Abschnitts des Federelements gebildet, an welchem ein mit dem Magneteiement verbundenes, insbesondere gelenkverbundenes, Verbindungselement angelenkt ist, derart, dass eine Kraft auf das Magnetelement übertragbar ist.

Bei einer weiteren bevorzugten Ausführungsform des Induktionsgenerators ist der erste mechanische Energiespeicher als mindestens ein Federarm gebildet ist, der sich von dem Krafteinleitungsbereich des Federelements in Richtung zu dem Magnetelement erstreckt, wobei sich der zweite Energiespeicher, welcher insbesondere als blattförmiges Federelement gebildet ist, von dem Krafteinleitungsbereich des Federelements in Richtung zu einem dem Magnetelement abgewandten Längsende der Induktionsspule erstreckt.

Bei noch einer weiteren bevorzugten Ausführungsform des Induktionsgenerators ist das Federelement mittels des zweiten Energiespeichers an der Induktionsspule abgestützt sowie mittels des ersten Energiespeichers mit dem Magnetelement zur Kraftübertragung verbunden.

Weiterhin wird in einer bevorzugten Ausführungsform ein Induktionsgenerator vorgeschlagen, wobei mittels der gespeicherten Energie des ersten mechanischen Energiespeichers zur mechanischen Beschleunigung der Verbringung des Magnetelements eine Kraft auf das Magnetelement ausübbar ist, insbesondere mittels des ersten Abschnitts des Federelements, welche in einer Richtung wirkt, in weicher die Schenkel zueinander benachbart sind.

Vorgeschlagen wird in einer bevorzugten Ausführungsform auch ein Funkschalter mit einer Senderbaugruppe und einer Antenne, wobei der Funkschalter einen erfindungsgemäßen Induktionsgenerator aufweist.

Weitere Merkmale und Vorteile der Erfindung ergeben sich aus der nachfolgenden Beschreibung von Ausführungsbeispielen der Erfindung, anhand der Figuren der Zeichnungen, die erfindungswesentliche Einzelheiten zeigen, und aus den Ansprüchen.

Einige bevorzugte Ausführungsformen der Erfindung werden nachfolgend anhand der beigefügten Zeichnungen näher erläutert. Es zeigen:
- Fig. 1: exemplarisch eine Seitenansicht einer ersten Ausführungsform des Induktionsgenerators gemäß einer Ausführungsform der Erfindung;
- Fig. 2: exemplarisch eine Ansicht eines teilgeschnittenen Induktionsgenerators gemäß Fig. 1;
- Fig. 3: exemplarisch einen Funkschalter im Schnitt, in welchem ein erfindungsgemäßer Induktionsgenerator gemäß Fig. 1 und 2 aufgenommen ist;
- Fig. 4: exemplarisch eine Explosionsansicht des Induktionsgenerators gemäß Fig. 1 oder 2;
- Fig. 5a) bis c): exemplarisch Stellungen des Magnetelements an einem Spulenkern gemäß einer Ausführungsform der Erfindung; und
- Fig. 6: exemplarisch die Kräfteverhältnisse in einer Ruhestellung bei einer Betätigung des Induktionsgenerators gemäß Fig. 1 und 2;
- Fig. 7: exemplarisch die Kräfteverhältnisse nach Verlassen der Ruhestellung bei einer Betätigung des Induktionsgenerators gemäß Fig. 1 und 2;
- Fig. 8: exemplarisch einen Induktionsgenerator gemäß einer weiteren Ausführungsform der Erfindung;
- Fig. 9: exemplarisch eine Ansicht des teilgeschnittenen Induktionsgenerators gemäß Fig. 8;
- Fig. 10: exemplarisch eine Ansicht eines Funkschalters mit einem Induktionsgenerator nach Fig. 8 und 9;
- Fig. 11: exemplarisch eine Explosionsansicht eines Induktionsgenerators gemäß Fig. 8 und 9;
- Fig. 12: exemplarisch die Kräfteverhältnisse in einer Ruhestellung bei einer Betätigung des Induktionsgenerators gemäß Fig. 8 und 9; und
- Fig. 13: exemplarisch die Signalverläufe der Induktionsspannungssignale an einem Induktionsgenerator mit einer metastabilen Stellung gemäß einer weiteren Ausführungsform der Erfindung; und
- Fig. 14: exemplarisch ein Steuerprofil eines Induktionsgenerators mit einer metastabilen Stellung, mittels welchem ein Signalverlauf gemäß Fig. 13 erhältlich ist.

In der nachfolgenden Beschreibung und den Zeichnungen entsprechen gleiche Bezugszeichen Elemente gleicher oder vergleichbarer Funktion.

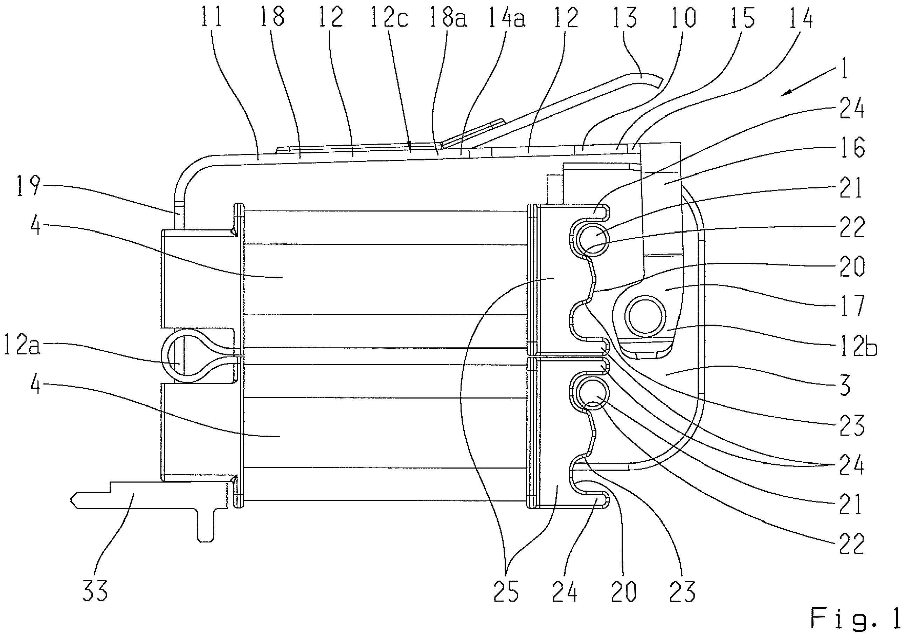

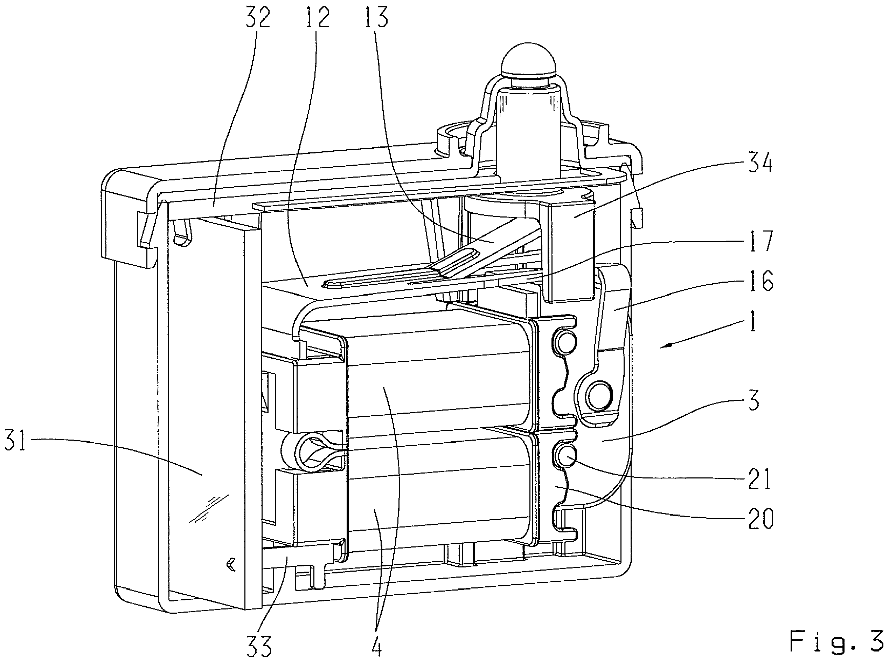

Fig. 1 zeigt exemplarisch eine Ausführungsform eines erfindungsgemäßen Induktionsgenerators 1, welcher z.B. in einem Funkschalter 2 (Fig. 3) einsetzbar ist, insbesondere in einem energieautarken Funkschalter 2. Der Induktionsgenerator 1 ermöglicht die Abgabe einer sehr hohen Energiemenge relativ zu dem damit erzielbaren Miniaturisierungsgrad. Der Induktionsgenerator 1 ist äußerst kompakt ausbildbar (Fig. 1), insbesondere als einstückiges Modul ausbildbar.

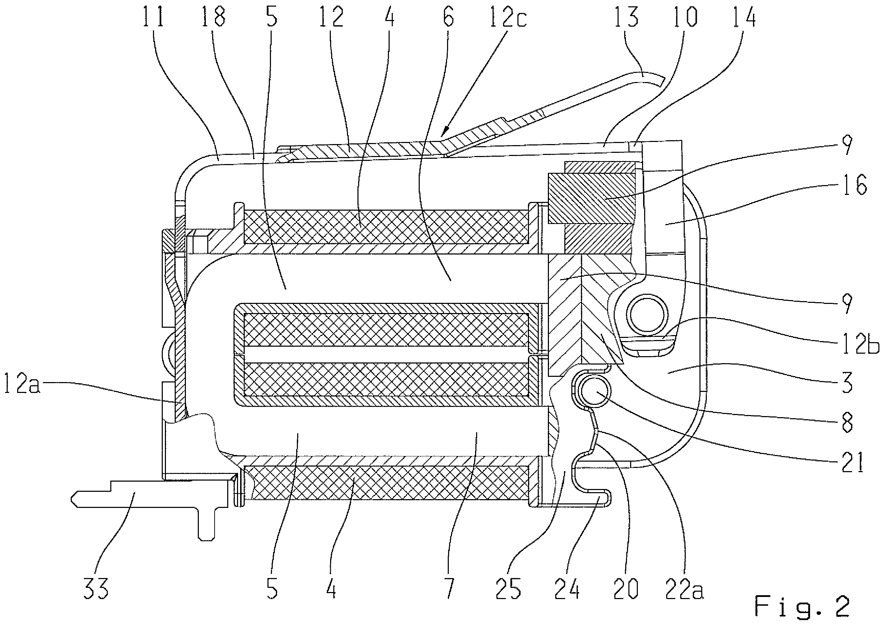

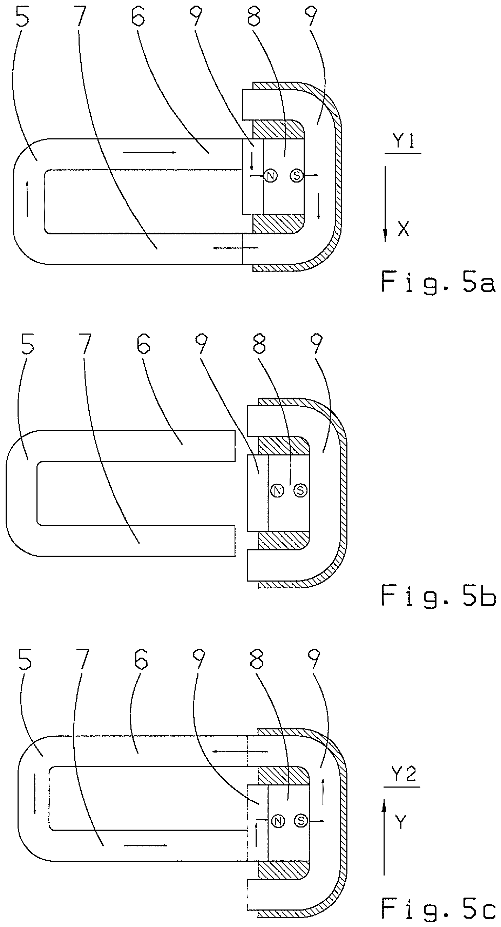

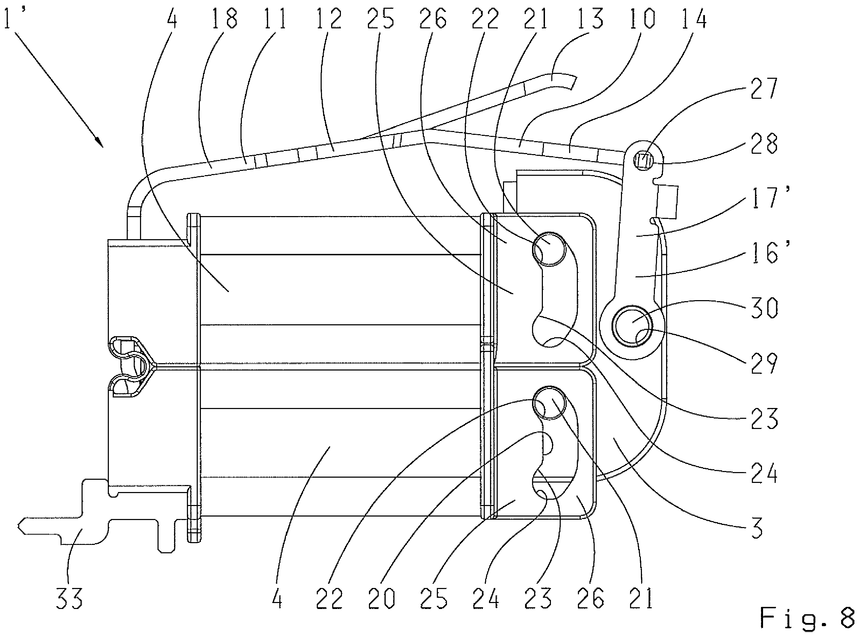

Der erfindungsgemäße Induktionsgenerator 1 weist zur Energieerzeugung ein Magnetelement 3 mit einem Permanentmagneten auf, sowie wenigstens eine Induktionsspule 4 (z.B. Fig. 1, Fig. 8) mit einem U-förmigen Spulenkern 5 (z.B. Fig. 2, Fig. 4, Fig. 5a) bis c)). Erfindungsgemäß ist das Magnetelement 3 relativ zu dem Spulenkern 5 bewegbar benachbart zu der Induktionsspule 4 angeordnet, z.B. an deren Stirnseite 4a, um eine Flussänderung in dem Kern 5 bewirken und eine Induktionsspannung mittels der Induktionsspule 4 erzeugen zu können, welche an eine weitere Baugruppe eines Funkschalters 2, z.B. eine Sendebaugruppe abgebbar ist. Der Spulenkern 5 weist einen ersten 6 und einen zweiten 7 Schenkel auf, relativ zu welchen bewegbar das Magnetelement 3 an dem Induktionsgenerator 1 aufgenommen bzw. fixiert ist. Die Schenkel 6, 7 erstrecken sich insbesondere parallel zueinander in Längsrichtung, Fig. 5a) bis c).

Das Magnetelement 3 ist derart ausgebildet und an dem Induktionsgenerator 1 aufgenommen, dass es zwischen zwei definierten Ruhestellungen Y1, Y2 an den Schenkeln 6, 7 infolge einer Betätigung des Induktionsgenerators 1 zur Umpolung des Spulenkerns 5 erzwungen bewegbar ist, wobei das Magnetelement 3 in jeder Ruhestellung Y1, Y2 zur Anlage an jeweils beiden Schenkeln 6, 7 gelangt. Insbesondere ist vorgesehen, dass das Magnetelement 3 jeweils an den vom Grund der U-Form weg weisenden Schenkelenden zur Anlage gelangt, um den Spulenkern 5 jeweils vollständig magnetisieren zu können, welche z.B. an der zu dem Magnetelement 3 benachbarten Stirnseite freiliegen.

Erfindungsgemäß ist der Induktionsgenerator 1 dabei insbesondere derart ausgebildet, dass das Magnetelement 3 in einer Richtung relativ zu den Schenkeln 6, 7 bzw. den Schenkelenden verlagerbar ist, in welcher die Schenkel 6, 7 zueinander benachbart sind, i.e. im Zuge des Wechsels der Ruhestellungen von Y1 nach Y2 oder umgekehrt. Eine derartige Verlagerung wäre durch eine lineare Verschiebung des Magnetelements 3 abbildbar. Im Rahmen der vorliegenden Erfindung bezeichnet dabei der Begriff Verlagerungsrichtung die Richtung, in welcher das Magnetelement 3 infolge eines Wechsels von der ersten Y1 in die zweite Y2 Ruhestellung verlagert ist, der Begriff Rückverlagerungsrichtung die Richtung, in welcher das Magnetelement 3 infolge eines Wechsels von der zweiten Y2 in die erste Y1 Ruhestellung verlagert ist, i.e. eine Richtung, welche entgegengesetzt zur Verlagerungsrichtung ist. Die Verlagerungsrichtung ist als X-, die Rückverlagerungsrichtung als Y-Richtung in Fig. 5a) und c) dargestellt.

Ein Zusammenwirken des Magnetelements 3 mit den Schenkeln 6, 7 des U-förmigen Spulenkerns 5 in der definierten ersten Y1 und der definierten zweiten Y2 Ruhestellung zeigen beispielhaft die Fig. 5a) und c). In Fig. 5a) befindet sich das Magnetelement 3 z.B. in der ersten definierten Ruhestellung Y1 am Induktionsgenerator 1, entsprechend einer Ausgangsstellung, in Anlage an den Schenkeln 6, 7 des U-förmigen Spulenkerns 5, wobei das Magnetelement 3 mittels eines zweipoligen Dauermagneten 8 sowie zweier Polschuhe 9 drei zueinander benachbarte Pole abwechselnder Polarität entsprechend magnetisch Nord (N) und Süd (S) ausbildet.

Erfindungsgemäß liegt dem ersten Schenkel 6 in der ersten definierten Ruhestellung Y1 ein Pol des Magnetelements 3 erster Polarität gegenüber, z.B. magnetisch Nord und in der zweiten definierten Ruhestellung Y2 gemäß Fig. 5c, ein Pol des Magnetelements 3 zweiter, von der ersten verschiedenen Polarität, z.B. magnetisch Süd. Gleiches gilt für den zweiten Schenkel 7. Die zweite definierte Ruhestellung Y2 gemäß Fig. 5c wird erfindungsgemäß infolge einer erzwungenen Bewegung des Magnetelements 3 entlang des vorgegebenen Bewegungswegs aus der Ruhestellung Y1 heraus eingenommen, insbesondere im Zuge einer Betätigung des Induktionsgenerators 1.

In jeder definierten Ruhestellung Y1, Y2 ist das Magnetelement 3 erfindungsgemäß an den Schenkeln 6, 7, zur Anlage gebracht, wodurch sich jeweils ein geschlossener ringförmiger magnetischer Fluss durch das Magnetelement 3 und den Spulenkern 5 ergibt. Die Flussrichtung in der ersten Ruhestellung Y1 ist dabei umgekehrt zu der zweiten Ruhestellung Y2 (angedeutet durch Pfeile in Fig. 5a) und c)), korrespondierend mit einer Umpolung des Spulenkerns 5 infolge eines Wechsels der Ruhestellungen, i.e. von Y1 nach Y2 oder umgekehrt.

Bei einer Bewegung zwischen den definierten Ruhestellungen Y1, Y2 wird das Magnetelement 3 erfindungsgemäß in Verlagerungs- bzw. Rückverlagerungsrichtung, i.e. einer Richtung, in welcher die Schenkel 6, 7 zueinander benachbart sind, verlagert, und dazu jeweils ausgelenkt, d.h. im Zuge einer Verbringung von einer Ruhestellung Y1 bzw. Y2 in die andere Ruhestellung Y2 bzw. Y1 von den Schenkeln 6, 7 entfernt, und anschließend eingelenkt, d.h. an die Schenkel 6, 7 angenähert. Der Bewegungsweg ist dabei derart vorgegeben, dass das Magnetelement 3 bei einer Bewegung lediglich in der ersten Y1 und in der zweiten Y2 Ruhestellung zur Anlage an den Schenkeln 6, 7 gelangt. Eine ausgelenkte Stellung entlang eines solchen vorgegebenen Bewegungswegs zeigt z.B. Fig. 5b.

Im Rahmen der vorliegenden Erfindung bedeutet der Begriff Auslenken, dass das Magnetelement 3 in einer ersten Richtung, welche auf der Verlagerungs- und Rückverlagerungsrichtung senkrecht steht, von den Schenkeln 6, 7, entfernt wird, z.B. in horizontaler Richtung. Einlenken bezeichnet dabei die Bewegung, bei welcher das Magnetelement 3 in der ersten Richtung wieder an die Schenkel 6, 7, angenähert wird.

Zwischen erster Y1 und zweiter Y2 Ruhestellung ist erfindungsgemäß eine Zwischenstellung entlang des Bewegungswegs definiert, insbesondere jeweils benachbart zu einer Ruhestellung Y1, Y2 je eine Zwischenstellung, bis zu welcher die Magnetkräfte des Magnetelements 3 bei Bewegung aus der Ruhestellung Y1 bzw. Y2 abnehmend auf den Spulenkern 5 wirken. Korrespondierend mit der Zwischenstellung, bei welcher das Magnetelement 3 bereits von dem Spulenkern 5 entfernt bzw. außer Anlage gebracht ist, i.e. ausgelenkt, lassen die Magnetkräfte auf den Spulenkern 5 schlagartig nach.

Der erfindungsgemäße Induktionsgenerator 1 weist weiterhin einen ersten mechanischen Energiespeicher 10 auf, welcher mit dem Magnetelement 3 wirkverbunden ist. Der erste mechanische Energiespeicher 10 ist dazu vorgesehen, im Zuge der Erzwingung einer Bewegung des Magnetelements 3 aus einer Ruhestellung Y1 bzw. Y2 zunächst Energie zu speichern, um diese zu einer mechanisch beschleunigten Verbringung in die jeweils andere Ruhestellung Y2 bzw. Y1 an das Magnetelement 3 abgeben zu können.

Ferner kann der Induktionsgenerator 1 insbesondere einen zweiten mechanischen Energiespeicher 11 aufweisen, welcher insbesondere dazu vorgesehen ist, im Zuge einer Verbringung des Magnetelements 3 ebenfalls Energie zu speichern, wobei diese an das Magnetelement 3 zum Verlassen der zweiten Ruhestellung Y2, d.h. zum Erzwingen einer Rückbewegung in die Ausgangsruhestellung Y1 abgebbar ist.

Nunmehr wird der Wirkzusammenhang des ersten 10 und des zweiten Energiespeichers 11 mit dem Magnetelement 3 für ein Verbringen des Magnetelements 3 aus der ersten Y1 in die zweite Ruhestellung Y2 und umgekehrt erläutert.

In der Ausgangsruhestellung Y1, entsprechend der ersten Ruhestellung (Fig. 1, Fig. 5a)) ist das Magnetelement 3 mittels der Magnetkraft fest an dem Spulenkern 5 gehalten, ggf. unter zusätzlicher Beaufschlagung mit einer Vorspannkraft. Im Zuge der Erzwingung einer Bewegung, i.e. infolge einer Betätigung des Induktionsgenerators 1, wird zunächst der erste 10 und ggf. der zweite 11 mechanische Energiespeicher mit einer Betätigungskraft beaufschlagt, derart, dass der erste 10 oder der erste 10 und der zweite 11 mechanische Energiespeicher zunehmend Betätigungsenergie speichern. Ab Überschreiten eines bestimmten, eingestellten Energieniveaus des ersten 10 oder des ersten 10 und des zweiten 11 Energiespeichers kann das Magnetelement 3 anschließend bei fortgesetzter Betätigung aus der Ausgangsruhestellung Y1 verbracht werden, wobei es zu einer Bewegung entlang des Bewegungswegs gezwungen ist. Eine Verbringung aus der Ruhestellung Y1 kann z.B. mittels des ersten Energiespeichers 10 erfolgen, welcher mit dem Magnetelement 3 wirkverbunden ist.

Der Bewegungsweg ist dabei derart vorgegeben, dass bei fortgesetzter Krafteinleitung der Betätigungskraft ein Lösen bzw. Abheben des Magnetelements 3 vom Spulenkern 5, i.e. ein Auslenken, erfolgt. Ab Erreichen einer entlang des Bewegungswegs definierten Zwischenstellung, bei welcher die Magnetkräfte schlagartig nachlassen, kann nunmehr eine ungehinderte Bewegung entlang des erfindungsgemäß vorgegebenen Bewegungswegs erfolgen, insbesondere in Verlagerungsrichtung, bei welcher das Magnetelement 3 in die zweite Ruhestellung Y2 verbracht wird.

Der erste Energiespeicher 10 ist erfindungsgemäß derart mit dem entlang des Bewegungswegs in Verlagerungsrichtung (und Rückverlagerungsrichtung) verbringbaren Magnetelement 3 wirkverbunden, dass nach einer Bewegung bzw. Auslenkung über die Zwischenstellung hinaus, i.e. nach Verlassen der Zwischenstellung, die gespeicherte Energie an das Magnetelement 3 abgegeben werden kann, wobei insbesondere eine Kraft erzeugt und auf das Magnetelement 3 ausgeübt wird, welche zusätzlich zu der in Verlagerungsrichtung X wirkenden Betätigungskraft in der Verlagerungsrichtung X auf das Magnetelement 3 wirkt. Die schnelle Bewegung des Magnetelements 3 entlang des Bewegungswegs, welche sich aus einer Auslenkbewegung, einer Bewegung in Verlagerungsrichtung X und einer Einlenkbewegung zusammensetzt, welche ab der Zwischenstellung ermöglicht ist, wird insofern mechanisch zusätzlich stark beschleunigt. Dadurch kann eine hohe Energiemenge durch das Induktionssystems aufgrund der schnellen Wiederannäherung des Magnetelements 3 an den Spulenkern 5 erzeugt werden.

Während der Bewegung in die zweite Ruhestellung Y2 kann der erfindungsgemäß mögliche zweite Energiespeicher 11 weiterhin zunehmend Energie aufnehmen. Mittels der gespeicherten Energie des zweiten Energiespeichers 11 kann nunmehr eine Bewegung des Magnetelements 3 aus der zweiten Ruhestellung Y2 erzwungen werden, i.e. bei Fortfall der Betätigung. Im Zuge der Erzwingung einer Bewegung aus der zweiten Ruhestellung Y2 speichert dabei wiederum der erste Energiespeicher 10 zunächst Energie, bevor eine Bewegung des Magnetelements 3 hin zur ersten Ausgangsruhestellung Y1 erfolgen kann. Dabei wird zunächst wiederum eine entlang des Bewegungswegs definierte, weitere Zwischenstellung eingenommen.

Ab Verlassen der weiteren, zur zweiten Ruhestellung Y2 benachbarten Zwischenstellung, deren Einnahme mittels des Bewegungswegs vorgegeben ist, kann der mit dem Magnetelement 3 wirkverbundene erste mechanische Energiespeicher 10 nunmehr wiederum die gespeicherte Energie zu einer mechanischen Beschleunigung der Verbringung des Magnetelements 3 in die andere Ruhestellung Y1 an das Magnetelement 3 abgeben, i.e. in Rückverlagerungsrichtung Y.

Der erste 10 und/oder der zweite 11 mechanische Energiespeicher sind erfindungsgemäß z.B. jeweils als separate Federelemente gebildet, z.B. als blattförmige Federelemente oder als Schraubenfedern. Der erste 10 und der zweite 11 mechanische Energiespeicher sind z.B. integral miteinander gebildet, z.B. als Stanzbiegebauteil, z.B. aus einem Federmaterial. Erfindungsgemäß korrespondiert das Abgeben der im ersten Energiespeicher gespeicherten Energie an das Magnetelement 3 jeweils mit dem Verlassen der Zwischenstellung.

Die Fig. 1, 2, 3, 4 zeigen beispielhaft einen erfindungsgemäßen Induktionsgenerator, welcher ein insbesondere einstückiges Federelement 12 aufweist, welches einen ersten 10 und einen zweiten 11 integral gebildeten Energiespeicher ausbildet, wobei der erste Energiespeicher 10 zur erfindungsgemäßen Freisetzung von gespeicherter Energie nach Verlassen der Zwischenstellung mit dem Magnetelement 3 wirkverbunden ist. Das Federelement 12 ist im Wesentlichen bügelförmig bzw. U-förmig gebildet, wobei es mit einem ersten Bügelende 12a an der Induktionsspule 4 fixiert ist und mit einem zweiten Bügelende 12b mit dem Magnetelement 3 wirkverbunden ist, insbesondere daran angelenkt ist. Zwischen den Bügelenden 12a, 12b erstreckt sich das Federelement 12 im Wesentlichen in Längsrichtung entlang der Induktionsspule 4, z.B. stegförmig.

Das Federelement 12 weist einen Krafteinleitungsbereich 12c auf, welcher zur Einleitung einer Betätigungskraft vorgesehen ist, insbesondere z.B. einen Mittenbereich. Zur Krafteinleitung in den Krafteinleitungsbereich 12c ist z.B. ein Krafteinleitungselement 13, z.B. eine Zunge, an dem Federelement 12 bzw. dem Federbügel vorgesehen, z.B. integral damit gebildet, welche mit einer Betätigungsvorrichtung eines Funkschalters 2 zusammen wirken kann. Das Federelement 12 bildet z.B. einen Betätiger des Induktionsgenerators 1, insbesondere in Verbindung mit dem Krafteinleitungselement 13.

Erfindungsgemäß ist vorgesehen, dass durch Krafteinleitung in den Krafteinleitungsbereich 12c sowohl der erste 10 als auch der zweite 11 Energiespeicher Energie speichern, z.B. jeweils durch elastische Verformung des Federelements, wie nachfolgend erläutert wird.

Bei der in z.B. Fig. 1 gezeigten Ausführungsform ist der erste mechanische Energiespeicher 10 des Induktionsgenerators 1 als erstes Federelement 14 somit als erster Abschnitt des Federelements 12, gebildet, z.B. als im Wesentlichen blattförmige Feder. Das erste Federelement 14, somit der erste Abschnitt des Federelements 12, erstreckt sich hierbei von dem zur Krafteinleitung vorgesehenen Krafteinleitungsbereich 12c in Richtung zu dem Magnetelement 3, insbesondere z.B. derart Raum greifend, dass das Magnetelement 3 überlappt ist. In Fig. 1 und 2 erstreckt sich der erste Abschnitt in Längsrichtung z.B. über das zu dem Magnetelement 3 benachbarte Ende der Induktionsspule 4 hinaus, derart, dass eine Verbindung mit dem Magnetelement 3 ermöglicht ist, welche eine Krafteinleitung in das Magnetelement 3 insbesondere in Verlagerungsrichtung und Rückverlagerungsrichtung ermöglicht. Eine solche Krafteinleitung ermöglicht erfindungsgemäß eine Bewegung des Magnetelements 3 aus der Ruhestellung Y1 bzw. Y2 und insbesondere die Verlagerung in einer Richtung, in welcher die Schenkel 6, 7 zueinander benachbart sind.

Das erste Federelement 14, somit der erste Abschnitt des Federelements 12, ist zur Energiespeicherung infolge einer elastischen Verformung im Zuge der Erzwingung einer Bewegung des Magnetelements 3 vorgesehen, z.B. zur elastischen Biegung. Eine solche Biegung ist hierbei durch Einleitung einer Betätigungskraft in einen Endbereich 14a des ersten Abschnitts vorgesehen bzw. ermöglicht, welcher mit dem vorgesehenen Krafteinleitungsbereich 12c des Federelements 12 korrespondiert und insbesondere integral mit dem zweiten Energiespeicher 11 gebildet ist.

Das erste Federelement 14, somit der erste Abschnitt des Federelements 12, ist insbesondere in Form mindestens eines Federarms 15 gebildet, vorliegend insbesondere in Form zweier Federarme 15, welche z.B. jeweils stäbchenförmig bzw. zinkenförmig gebildet sein können.

Das erste Federelement 14, somit der erste Abschnitt des Federelements 12, entsprechend dem ersten mechanischen Energiespeicher 10, ist mittels mindestens eines Verbindungselements 16, insbesondere in Form eines nach unten ragenden Arms 17, mit dem Magnetelement 3 wirkverbunden, und dazu vorgesehen, mittels des Verbindungselements 16 sowohl eine Kraft in Verlagerungsrichtung oder Rückverlagerungsrichtung als auch ein Drehmoment zur Erzwingung einer Bewegung des Magnetelements 3 zu übertragen. Das Verbindungselement 16 bildet das zweite Bügelende 12b des Federelements 12 aus, welches mit dem Magnetelement 3 verbunden ist. Das Verbindungselement 16 bzw. der mindestens eine Arm 17 ist insbesondere z.B. an dem Magnetelement 3 angelenkt. Das Verbindungselement 16 ist z.B. als steifes Element gebildet und insbesondere integral mit dem ersten Federelement 14, somit dem ersten Abschnitt des Federelements 12 ausgebildet.

Erfindungsgemäß ist z.B. vorgesehen, das Magnetelement 3 mittels zweier Arme 17 mit dem ersten Federelement 14, somit dem ersten Abschnitt des Federelements 12 zu verbinden, insbesondere z.B. jeweils einen Arm 17 mit jeweils einem Federarm 15 zu verbinden, wobei die Arme 17 insbesondere beidseitig des Magnetelements 3 in Querrichtung angelenkt sind, derart, dass ein Verkanten des Magnetelements 3 bei einer Bewegung verhindert ist. Bei der gezeigten Ausführungsform wird mittels des mindestens einen Arms 17 eine durch das erste Federelement 14, somit dem ersten Abschnitt des Federelements 12, erzeugte Vorspannkraft auf das Magnetelement 3 ausgeübt bzw. übertragen, derart, dass das Magnetelement 3 in Richtung zur Induktionsspule 4 gedrängt wird. Dadurch wird vermieden, dass sich das Magnetelement 3 im Zuge einer Auslenkung derart von dem Spulenkern 5 entfernt, dass eine Wiederannäherung erschwert ist.

Der zweite mechanische Energiespeicher 11 ist ebenfalls als Federelement, insbesondere als Abschnitt des Federelements 12 gebildet und nachfolgend als zweiter Abschnitt des Federelements 12 bzw. zweites Federelement 18 bezeichnet. Der zweite mechanische Energiespeicher 11 ist beispielsweise als im Wesentlichen blattförmige Feder gebildet, beispielsweise als Federsteg. Das zweite Federelement 18 bzw. der zweite Abschnitt des Federelements 12 ist insbesondere integral mit dem ersten Federelement 14 bzw. dem ersten Abschnitt des Federelements 12 gebildet. Das zweite Federelement 18 bzw. der zweite Abschnitt des Federelements 12 ist insbesondere zur elastischen Verformung infolge einer Betätigung vorgesehen, i.e. zur elastischen Biegung. Alternativ kann zur Bildung eines Induktionsgenerators 1 bzw. eines Funkschalters 2, welcher keine Rückstellung des Magnetelements 3 aus der zweiten Ruhestellung Y2 durch einen zweiten mechanischen Energiespeicher vorsieht, der zweite mechanische Energiespeicher 11 fortfallen, wobei stattdessen z.B. ein starres Element, welches an der Induktionsspule 4 gelenkig abgestützt ist, vorgesehen sein kann, wobei das starre Element integral mit dem ersten Abschnitt 14 gebildet sein kann.

Eine Energiespeicherung im Zuge der Erzwingung einer Bewegung von der ersten Y1 in die zweite Y2 Ruhestellung ist hierbei durch Einleitung einer Betätigungskraft in einen Endbereich 18a des zweiten Federelements 18 bzw. des zweiten Abschnitts des Federelements 12 ermöglicht bzw. vorgesehen, welcher mit dem Krafteinleitungsbereich 12c des Federelements 12 korrespondiert und insbesondere integral mit dem Endbereich 14a des ersten Energiespeichers 10 gebildet ist, i.e. einen Verbindungsbereich damit ausbildet.

Das zweite Federelement 18 bzw. der zweite Abschnitt des Federelements 12 ist insbesondere an einem dem Magnetelement 3 abgewandten Längsende der Induktionsspule 4 abgestützt, um eine mit der eingeleiteten Betätigungskraft korrespondierende Biegung zu ermöglichen, wobei das zweite Federelement 18 bzw. der zweite Abschnitt des Federelements 12 zur Abstützung z.B. ein integral damit gebildetes, nach unten ragendes Abstützelement 19 ausbildet, entsprechend einem ersten Bügelende 12a des Federelements 12. Alternativ kann z.B. die Induktionsspule 4 eine Abstützung für das zweite Federelement 18 bzw. den zweiten Abschnitt des Federelements 12 ausbilden. Erfindungsgemäß bilden die zur Energiespeicherung vorgesehenen ersten und zweiten Federelemente 14, 18 bzw. ersten und zweiten Abschnitte des Federelements 12 zusammen im Wesentlichen einen Federstreifen, insbesondere einen Federstreifen, der zur im Wesentlichen mittigen Krafteinleitung vorgesehen ist, wobei dessen Enden mit der Induktionsspule und dem Magnetelement 3 verbunden sind.

Erfindungsgemäß ist vorgesehen, dass zu einer Betätigung des Induktionsgenerators 1 mittels des Federelements 12, im Zuge derer eine Bewegung des Magnetelements 3 zwischen den Ruhestellungen Y1, Y2 erzwingbar ist, eine Betätigungskraft F_{B} in den Krafteinleitungsbereich 12c des Federelements 12 eingeleitet wird, wobei sich das Magnetelement 3 insbesondere in der ersten Ruhestellung bzw. der Ausgangsstellung Y1 befindet (gezeigte Stellung in z.B. Fig. 1, 2), i.e. magnetisch am Spulenkern 5 festgehalten ist.

Durch die Betätigungskrafteinleitung in den Krafteinleitungsbereich 12c erfahren der erste und der zweite Abschnitt des Federelements 12 bzw. das erste Federelement 14 und das zweite Federelement 18 zunächst jeweils eine Biegung, deren Ausmaß an den dem Krafteinleitungsbereich 12c zugewandten Enden 14a, 18a am größten ist, i.e. eine Biegung im Verbindungsbereich. Im Zuge der jeweiligen Durchbiegung bzw. der elastischen Verformung speichern dabei sowohl der erste 10 als auch der zweite 11 Energiespeicher unabhängig voneinander Betätigungsenergie. Um eine Biegung des ersten und des zweiten Abschnitts bzw. des ersten und zweiten Federelements 14, 18 zu ermöglichen, ist das Federelement 12 vorliegend mit Abstand zur Induktionsspule 4 geeignet abgestützt, i.e. an der Induktionsspule 4 bzw. an dem durch insbesondere die Magnetkraft an dem Spulenkern 5 fest gehaltenen Magnetelement 3.

Bei Erreichen bzw. Überschreiten der speicherbaren Energiemenge, insbesondere ab Überschreiten der im ersten Abschnitt bzw. im ersten Federelement 14 gespeicherten Energiemenge, bzw. einer vorgesehenen elastischen Verformung, welche z.B. zu einer gemeinsam gebildeten U-Form oder einer V-Form der integral gebildeten ersten und zweiten Federelemente 14, 18 bzw. den ersten und zweiten Abschnitte des Federelements 12 führt, kann eine fortgesetzt eingeleitete Betätigungskraft nunmehr mittels des Federelements 12, insbesondere mittels des Verbindungselements 16 in z.B. Form des Arms 17, in verstärktem, insbesondere vollem, Umfang auf das Magnetelement 3 übertragen werden, i.e. in Verlagerungsrichtung.

Infolge der nunmehr verstärkt in das Magnetelement 3 eingeleiteten Betätigungskraft kann eine Bewegung des Magnetelements 3 erzwungen werden, i.e. das Magnetelement 3 wird aus seiner Ausgangsstellung Y1 entlang des vorgegebenen Bewegungswegs gedrängt.

Erfindungsgemäß ist der Bewegungsweg zwischen den Ruhestellungen Y1, Y2 und umgekehrt dabei derart vorgegeben, dass bei fortgesetzter Betätigung bzw. einer fortgesetzten Erzwingung einer Bewegung zunächst ein Lösen des Magnetelements 3 vom Spulenkern 5 erfolgt (Auslenken) und damit einhergehend bzw. nachfolgend eine Bewegung in einer Richtung, in welcher die Schenkel 6, 7 zueinander benachbart sind (Verlagerungsrichtung bzw. Rückverlagerungsrichtung), sowie weiterhin ein In-Anlage-Gelangen am Spulenkern 5 in der einzunehmenden Ruhestellung Y1 bzw. Y2 (Einlenken). Mittels des Auslenkens kann dabei die Zwischenstellung erreicht werden, ab Überwinden derer eine schnelle Bewegung des Magnetelements 3 weitgehend ohne Hinderung durch die Magnethaltekräfte ermöglicht ist. Nach Überwinden der Zwischenstellung wird insbesondere die Bewegung in Verlagerungsrichtung bzw. in Rückverlagerungsrichtung durch die gespeicherte Energie des ersten Energiespeichers 10 durch mechanische Beschleunigung, insbesondere infolge einer schlagartigen Freisetzung von Energie, unterstützt.

Zur Vorgabe eines solchen Bewegungswegs bildet der Induktionsgenerator 1, insbesondere z.B. die mindestens eine Induktionsspule 4 zusammen mit dem Magnetelement 3, erfindungsgemäß insbesondere eine Kurvensteuerung aus (z.B. Fig. 1, 3, 4), welche mittels eines Rastprofils bzw. einem Steuerprofil 20 und einem entlang des Steuerprofils geführten Elements 21, insbesondere einem Eingriffselement 21 gebildet ist.

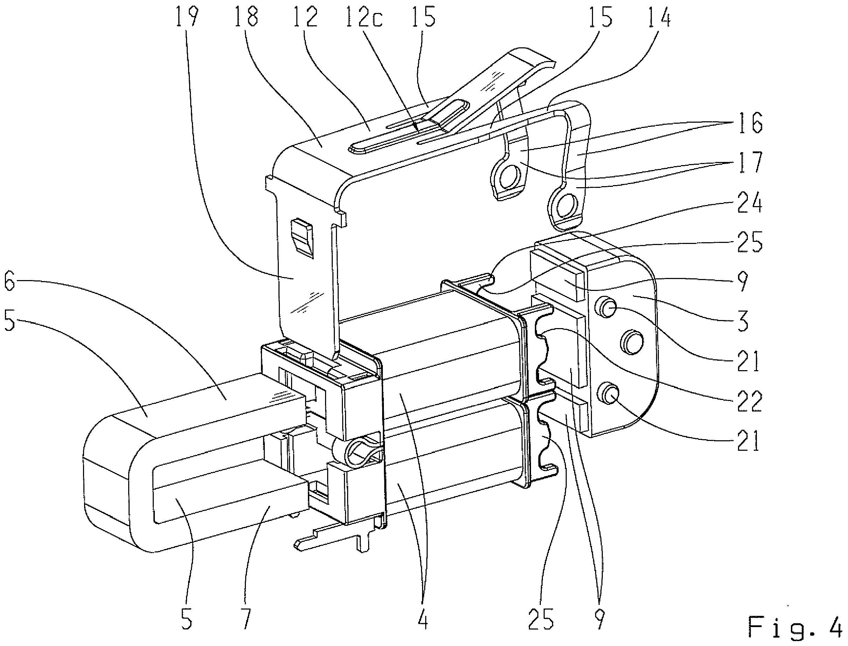

Ein geeigneter Bewegungsweg bzw. ein geeignetes Steuerprofil 20, welcher das Verbringen des Magnetelements 3 in die definierte Zwischenstellung sowie ein weiteres mechanisch beschleunigtes Verbringen in die andere Ruhestellung Y1 bzw. Y2 nach Verlassen der Zwischenstellung ermöglicht, ist erfindungsgemäß, wie in z.B. Fig. 1 oder Fig. 4 gezeigt, ein Bewegungsweg bzw. ein Steuerprofil 20 mit einer ersten 22 und einer zweiten 23, aufeinander zu laufenden Anschrägung, i.e. entsprechend einer ansteigenden und einer abfallenden Rampe, z.B. ein Kreisbogen oder ein Λ-förmiger Bewegungsweg, wobei zwischen den enger beabstandeten Anschrägungsenden 22a, 23a z.B. ein Plateau gebildet sein kann, zumindest ein Extremwert.

Die Anschrägungen 22, 23 dienen jeweils zur Auslenkung des Magnetelements 3 aus einer Ruhestellung Y1 bzw. Y2 bei Einleitung einer Kraft, i.e. einer nach Befüllung des ersten 10 oder des ersten 10 und zweiten 11 Energiespeichers fortgesetzt einwirkenden Kraft in Verlagerungsrichtung bzw. Rückverlagerungsrichtung, welche das Magnetelement 3 gegen jeweils eine Anschrägung 22 bzw. 23 drängt, so dass das Magnetelement 3 gezwungen wird, sich entlang der Anschrägung zu bewegen, insbesondere die definierte Zwischenstellung einzunehmen. Ferner sind die Anschrägungen 22, 23 dazu vorgesehen, ein Einlenken zu erzielen. Die Anschrägungen 22, 23 sind insofern am Anfang und am Ende des Bewegungswegs vorgesehen.

Die Kurvensteuerung, insbesondere das Steuerprofil 20, weist ferner z.B. ein erstes und ein zweites Anschlagselement 24 auf, welche den Bewegungsweg des Magnetelements 3 jeweils begrenzen und insofern die Ruhestellungen Y1, Y2 definieren, z.B. in Form von Rastsitzen, in welchen das Magnetelement 3 in Anlage an jeweils den Schenkeln 6, 7 ist, insofern stabile Ruhestellungen.

Vorliegend weist z.B. die Induktionsspule 4 ein Element auf, welches das Steuerprofil 20 ausbildet, nachfolgend als Steuerkurventräger 25 bezeichnet. Der Steuerkurventräger 25 ist insbesondere dem Magnetelement 3 gegenüberliegend gebildet, wobei das Steuerprofil 20 dem Magnetelement 2 an der Stirnseite 4a der Induktionsspule 4 gegenüberliegt, derart, dass das Eingriffselement 21 daran führbar ist. Das Magnetelement 3 weist dabei das korrespondierende Eingriffselement 21 auf, z.B. mindestens einen Zapfen. Das Eingriffselement 21 wird insbesondere durch eine Vorspannung des Verbindungselements 16 gegen das Steuerprofil 20 gedrängt.

Denkbar ist erfindungsgemäß auch, das Steuerprofil 20 am Magnetelement 3 auszubilden, z.B. integral damit, und das Eingriffselement 21 z.B. an der Induktionsspule 4. Das Magnetelement 3 ist bei einer Bewegung entlang des durch das Steuerprofil 20 vorgegebenen Bewegungswegs vorzugsweise derart abgestützt, dass ein Verkanten verhindert und eine gute Führbarkeit ermöglicht ist. Dazu ist das Steuerprofil 20 bzw. das Eingriffselement 21 z.B. in Querrichtung beidseitig der Induktionsspule 4 bzw. des Magnetelements 3 gebildet, insbesondere z.B. identisch. Z.B. kann ein einziger Steuerkurventräger 25 mit zwei zueinander in Querrichtung benachbarten Steuerprofilen 20 verwendet werden.

Vorliegend weist der Induktionsgenerator 1 z.B. zwei übereinander angeordnete Induktionsspulen 4 oder eine Doppelspule 4 auf, welche z.B. jeweils einen Schenkel 6 bzw. 7 des Spulenkerns 5 umschließen. An jeder Induktionsspule 4 ist ein Steuerkurventräger 25 mit einem zur benachbarten Induktionsspule 4 identischen Steuerprofil 20 angeordnet. Jedem Steuerprofil 20 ist ein geführtes Eingriffselement 21 des Magnetelements 3 zugeordnet, so dass eine sichere Führung des Magnetelements 3 entlang des Bewegungswegs ermöglicht ist.

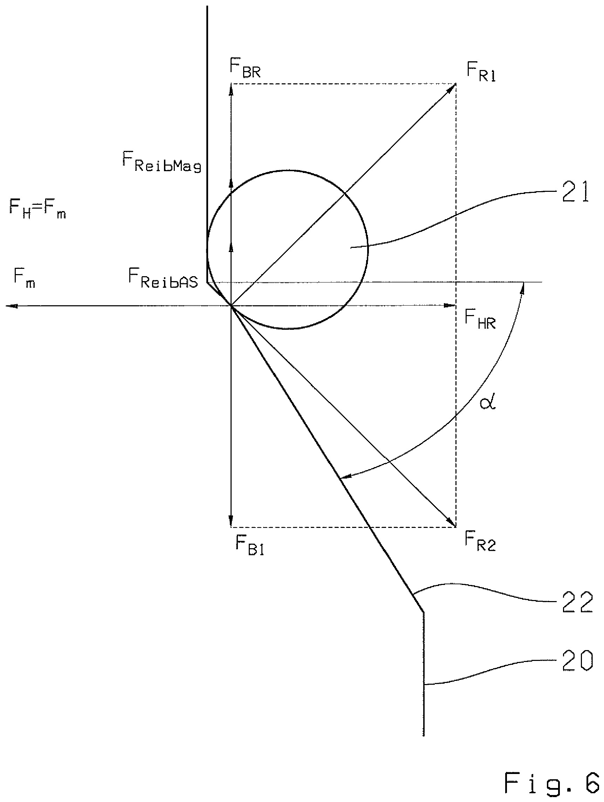

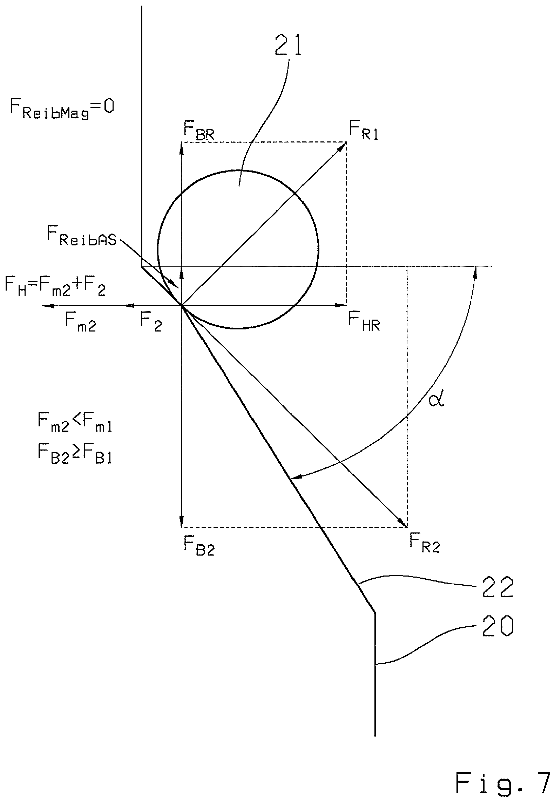

Nachfolgend wird die erfindungsgemäße Funktionalität des in Fig. 1 bis 4 gezeigten Induktionsgenerators 1 erläutert. Dazu wird insbesondere auf die Fig. 6 und 7 verwiesen, welche die Kräfteverhältnisse vor Erreichen der Zwischenstellung, Fig. 6, und nach Verlassen der Zwischenstellung, Fig. 7, darstellen.

Zu Beginn einer Betätigungskrafteinleitung zur Erzwingung einer Bewegung des Magnetelements 3 wird zunächst das Federelement 12 elastisch verformt, i.e. der erste und der zweite Abschnitt speichern jeweils Energie. Ab Erreichen einer bestimmten Verformung, einhergehend mit einer höheren Biegesteifigkeit des Federelements 12 bzw. des ersten und zweiten Abschnitts bzw. des ersten Federelements 14 und des zweiten Federelements 18 wird die Betätigungskraft nunmehr auf das Magnetelement 3 übertragen. Somit wird das Magnetelement 3, welches nunmehr in Verlagerungsrichtung X mit einer Betätigungskraft beaufschlagt ist, gegen die Anschrägung 22 gedrängt. Die Anschrägung 22 führt das Magnetelement 3 auf einem Bewegungsweg, welcher mittels der eingeleiteten Kraft eine Auslenkung erzwingt, i.e. eine Einnahme der Zwischenstellung.

Bis zur Zwischenstellung wird z.B. die Durchbiegung des Federelements 12 im Wesentlichen eingehalten. Ab der Zwischenstellung, i.e. nach Überwinden der magnetischen Haltekraft, erfolgt jedoch eine schnelle Bewegung des Magnetelements, einhergehend mit einer starken Auslenkung. Infolge des gewonnenen Bewegungsfreiraums in Verlagerungsrichtung im Zuge der Bewegung kann sich der am zweiten Federelement 18 bzw. zweiten Abschnitt des Federelements 12 im Verbindungsbereich abgestützte erstes Federelement 14 bzw. erste Abschnitt des Federelements 12 entspannen und somit das Magnetelement 3 beschleunigen.

Fig. 6 und Fig. 7 zeigen jeweils exemplarisch ein Eingriffselement 21 in Anlage an einer Anschrägung 22, wobei ein Auslenken infolge der Einleitung einer in Verlagerungsrichtung wirkenden Betätigungskraft vorgesehen ist. In Fig. 6 befindet sich das Eingriffselement 21 bzw. korrespondierend das Magnetelement 3 in der Ruhestellung Y1, während es in Fig. 7 bereits ausgelenkt ist, insbesondere in einer Stellung ist, in welcher erfindungsgemäß gespeicherte Energie aus dem ersten Energiespeicher 10 zu einer beschleunigten Verbringung des Magnetelements 3 in die andere Ruhestellung Y2 an das Magnetelement 3 in der Verlagerungsrichtung X abgegeben wird.

Das an der Induktionsspule 4 angeordnete Federelement 12, insbesondere der erste Abschnitt ist im Ruhe- bzw. unbetätigten Zustand mit einer bestimmten Kraft F vorgespannt. Die Kraft F drängt mittels des Verbindungselements 16 das damit verbundene Magnetelement 3 in Rückverlagerungsrichtung in die erste Ruhestellung Y1. Der erste Abschnitt des Federelements 12 ist dabei derart vorgespannt, dass das Eingriffselement 21 und insofern das Magnetelement 3 gegen das Steuerprofil 20 gedrängt wird. Diese Vorspannkraft wird vorliegend als F₂ bezeichnet.

In dieser Ruhestellung entsprechend Y1 befindet sich das Eingriffselement 21 in einem z.B. verrasteten Zustand mit dem Steuerprofil 20, z.B. in Anlage an einem Anschlagelement 24 des Steuerprofils 20 und in Anlage an der benachbarten Anschrägung 22.

Wird nunmehr mit der Kraft F_{B1}, entsprechend einer Betätigungskraft (siehe Fig. 6) in Verlagerungsrichtung auf den Krafteinleitungsbereich 12c, z.B. mittels des Krafteinleitungselements 13, insbesondere z.B. die Zunge, des Federelements 12 gedrückt, wird zunächst Betätigungsenergie im ersten Energiespeicher 10 gespeichert, woraufhin das Magnetelement 3 zur Auslenkung zunehmend gegen die Anschrägung 22 gedrängt wird.

Die Betätigungskraft F_{B1} (Fig. 6) und eine resultierende Haltekraft F_{H} erzeugen im Berührungspunkt zwischen dem Eingriffselement 21, z.B. dem Zapfen, und dem Steuerprofil 20 bzw. der Anschrägung 22 eine Reaktionskraft F_{R1}, die sich nach dem Kräfteparallelogramm aus F_{BR}=F_{B} (wobei F_{BR} die Reibungskraft F_{ReibMag} zwischen Magnetelement 3 und Spulenkern 5 sowie F_{ReibAS} zwischen Magnetelement 3 und Anschrägung 22 bzw. Rampe beinhaltet) und F_{HR} zusammensetzt. Die resultierende Kraft F_{R1} wirkt immer senkrecht zu der Berührungsfläche am Steuerprofil 20 und ist von dem Winkel α nach der Kraftparallelogramm-Regel abhängig (Reibungskraft bzw. Reibungsweg sind abhängig von a).

Mit der Zunahme der Betätigungskraft F_{B1} steigen auch die Reaktionskräfte F_{R1}, F_{R2} und F_{HR}. Sobald F_{HR} F_{H} überschreitet, geht das Gleichgewicht verloren und das Magnetelement 3 setzt sich entlang des Steuerprofils 20 bzw. der Anfahrschräge 22 in Bewegung. Dies erfolgt, wenn die Reibungskraft F_{ReibMag} gegen Null geht und die Magnetkraft F_{M1} kontinuierlich abnimmt (Fig. 7).

Die erfindungsgemäße Zwischenstellung wird nunmehr eingenommen, in dem die Reibungskraft gegen Null geht und die Magnethaltekraft Fₘ₁ mit zunehmender Entfernung überproportional bzw. schlagartig abnimmt (das Eingriffselement 21 bzw. der Zapfen ist minimal bei Reibungskraft gleich Null von dem Steuerprofil entfernt). Dabei wird die Kraft F_{R1} deutlich nachlassen, während F_{R2} zumindest gleich bleibt. Dadurch wird das Gleichgewicht verletzt, insofern als der erste mechanische Energiespeicher 10 bzw. der erste Abschnitt des Federelements 12 die entsprechende Energiemenge bereits gespeichert hat und das Magnetelement 3 nun mechanisch beschleunigen kann, in dem die Energie aus dem ersten Energiespeicher 10 bzw. dem ersten Abschnitt des Federelements 12 freigesetzt wird. Dies entspricht der Zwischenstellung.

Die notwendige Kraft F_{B} zum Umschalten bzw. für eine Bewegung in die andere Ruhestellung Y2 wird in den Federarmen 15 des Federelements 12 erst bei dem Erreichen des Betätigungsweges aufgebaut. Der Betätigungsweg ist dabei in etwa gleich mit dem Rasterweg des Magnetelements 3.

Nach Verlassen der Zwischenstellung kann das Magnetelement 3 nunmehr mit sehr geringem Widerstand, welcher hauptsächlich durch die Kraft F₂ verursacht ist, in die andere Ruhestellung Y2 gebracht werden, i.e. die Anfahrschräge 22 überwunden und entlang der weiteren Anfahrschräge 23 eingelenkt werden, wobei gleichzeitig eine Verlagerung in einer Richtung erfolgt, in welcher die Schenkel zueinander benachbart sind. Die in dem ersten Energiespeicher 10 gespeicherte Kraft F_{B2}, welche ebenfalls in Verlagerungsrichtung wirkt, sorgt dabei für sehr starke Beschleunigung und schlagartige Bewegung des Magnetelements 3 in die andere Ruhestellung Y2. Insofern wird das Magnetelement 3 durch die an das Magnetelement 3 abgegebene, gespeicherte Energie des ersten mechanischen Energiespeichers 10 mechanisch beschleunigt in die jeweils andere Ruhestellung Y2 bzw. Y1 nach Verlassen der Zwischenstellung verbracht.

Während der Bewegung entlang des Bewegungswegs bzw. des Steuerprofils 20 lässt F_{B} nach bzw. geht quasi gegen Null in der zweiten Ruhestellung Y2, entsprechend z.B. einer zweiten Schaltstellung eines Funkschalters 2. Bei Annäherung an die zweite Ruhestellung Y2 bzw. einem Einlenken in die zweite Ruhestellung Y2 wird das Magnetelement 3 aufgrund der Kraft F₂, i.e. der Vorspannkraft, wieder gegen den Spulenkern 5 gedrückt.

Bei einer durch den Bewegungsweg vorgegebenen Annäherung des Magnetelements 3 an den Spulenkern 5 wird die zunehmende Magnetkraft Fm das Magnetelement 3 mit dem Spulenkern 5 ebenso schnell verbinden, derart, dass sich ein gegenüber der ersten Ruhestellung Y1 umgekehrt verlaufender, geschlossener magnetischer Ringfluss einstellt. Durch die erfindungsgemäße, stark beschleunigte Verbringung des Magnetelements 3 zwischen den Ruhestellungen Y1, Y2 kann somit eine sehr hohe Energiemenge erzeugt werden.

Dabei kann das Federelement 12 nach Einlenken in die zweite Ruhestellung Y2, bei welcher das Eingriffselement 21 zur Anlage an dem Anlageelement 22 gelangt, weiter betätigt werden, wobei z.B. das Federelement 12 weiter elastisch verformt wird. Dieser Betätigungsweg wird Nachlaufweg genannt, welcher in der Regel erforderlich ist, um die Bewegungswegtoleranzen in den Anwendungsfällen auszugleichen.

Eine Bewegung des Magnetelements 3 aus der zweiten Ruhestellung Y2 in die erste Ausgangsruhestellung Y1 erfolgt dabei nach dem gleichen Prinzip wie zuvor beschrieben. Die Betätigungskraft F_{B} ist in der zweiten Ruhestellung Y2 reduziert bzw. eliminiert. Die Erzwingung einer Bewegung aus der zweiten Ruhestellung Y2 zurück in die erste Ruhestellung Y1 erfolgt durch die im zweiten Abschnitt 18 gespeicherte Rückstellkraft F, welche in Rückverlagerungsrichtung auf das Magnetelement 3 einwirkt, und welche vor einer Bewegung in die erste Ruhestellung Y1 in eine gegenläufige Vorspannung des ersten Abschnitts des Federelements 12, insbesondere der Federarme 15, umgewandelt wird, i.e der erste mechanische Energiespeicher 10 speichert zunächst wiederum Energie, i.e. insbesondere durch Biegung, wobei die Biegung insbesondere in entgegengesetzter Richtung erfolgt.

Nach Erreichen der weiteren Zwischenstellung, welche benachbart zur zweiten Ruhestellung Y2 mittels der weiteren Anfahrschräge 23 eingenommen wird, kann die im ersten Energiespeicher 10 bzw. im ersten Abschnitt des Federelements 12 nunmehr gespeicherte Energie wiederum schlagartig freigesetzt bzw. an das Magnetelement 3 abgegeben werden, derart, dass eine mechanisch durch die gespeicherte Energie des ersten Energiespeichers 10 beschleunigte Verbringung in die erste Ruhestellung Y1 erfolgt.

Das schlagartige Freisetzen der im ersten Energiespeicher 10 in Form des ersten Abschnitts des Federelements 12 gespeicherten Energie erfolgt zum Beispiel wiederum durch eine schlagartige Entlastung des zuvor durch die Betätigungskraft belasteten und insoweit elastisch gebogenen ersten Abschnitts des Federelements 12, z.B. durch eine schlagartige Rückbiegung, entsprechend zum Beispiel der Entspannung eines Bogens nach Freilassen der Bogensehne.

Eine Rückbiegung bzw. eine Entspannung des ersten Abschnitts des Federelements 12, entsprechend einem Freisetzen der Energie ist zum Beispiel im Zuge der zunehmenden schnellen Auslenkung, veranlasst durch die jeweiligen Anschrägungen 22, 23 korrespondierend mit einem Überwinden der Zwischenstellung ermöglicht.

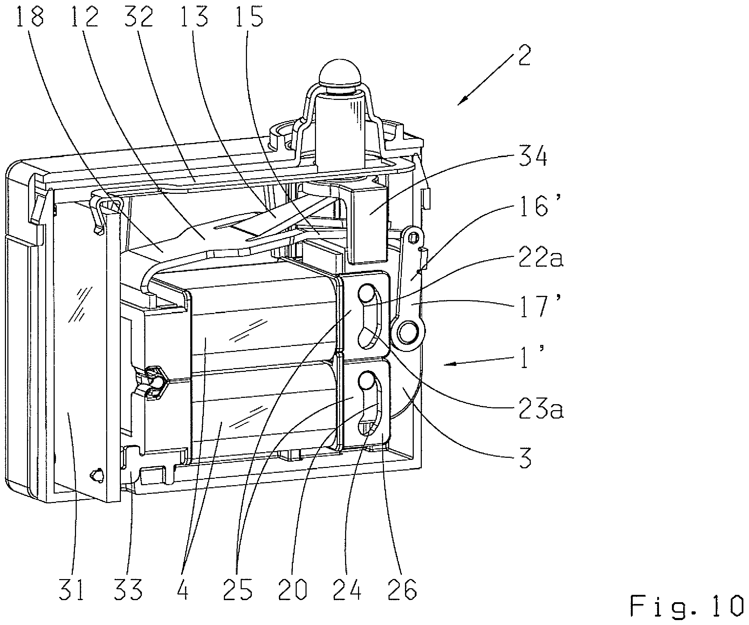

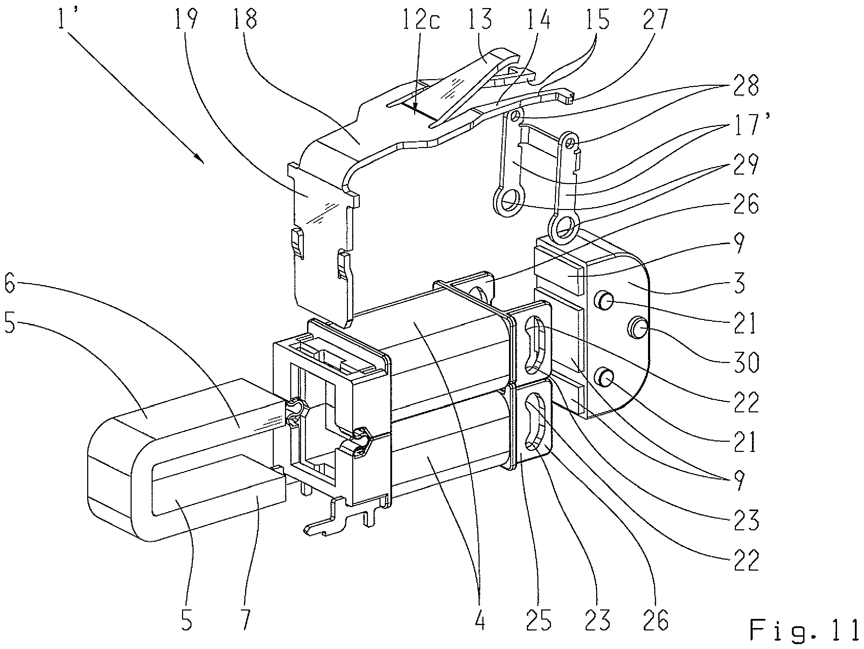

Die Figuren 8, 9 und 11 zeigen exemplarisch eine weitere Ausführungsform eines erfindungsgemäßen Induktionsgenerators 1', welcher zur Bildung eines Funkschalters 2 vorgesehen ist, Fig. 10. Der Induktionsgenerator 1' erfordert keine Vorspannkraft, um das Magnetelement 3 entlang des Bewegungswegs zu führen. Somit kann das Magnetelement 3 unter Aufwendung einer geringeren Betätigungskraft ausgelenkt bzw. zu einer Bewegung gezwungen werden, wobei eine gleichermaßen hohe Energiemenge erzielbar ist.

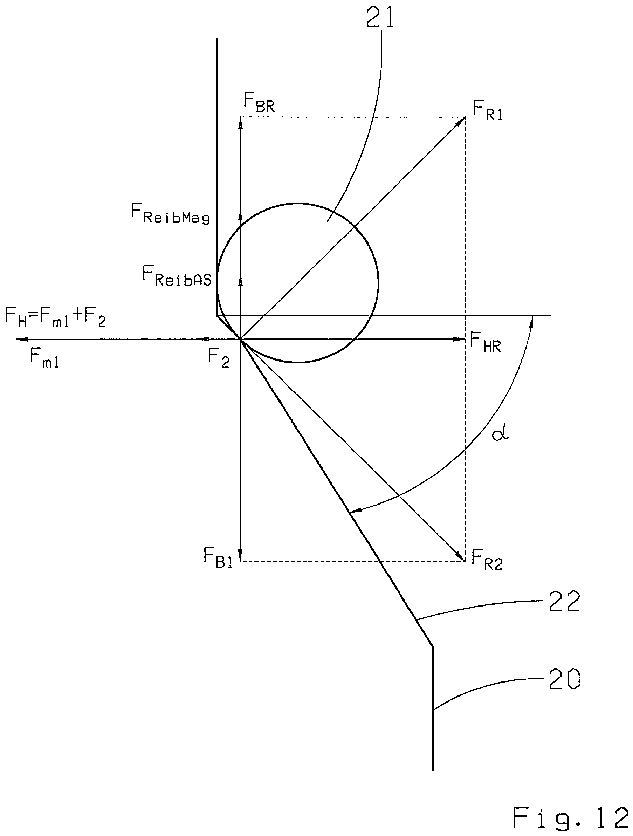

Dazu weist der Induktionsgenerator 1' eine Kurvensteuerung mit einem als Käfig ausgebildeten Steuerkurventräger 25 auf, i.e. einem Steuerkäfig 26, mittels welchem das Eingriffselement 21 entlang des vorgegebenen Bewegungswegs bzw. des Steuerprofils 20 der Kurvensteuerung geführt, insbesondere zwangsgeführt, ist. Das Steuerprofil 20 ist dabei innerhalb des Käfigs 26 ausgebildet. Durch Verwendung des Steuerkäfigs 26 ist eine Vorspannkraft F₂ entbehrlich, insofern als das im Steuerkäfig 26 geführte Eingriffselement 21 nicht von dem vorgegebenen Bewegungsweg abweichen kann. Das Kräfteverhältnis in der Ruhestellung Y1 bei dieser Ausführungsform zeigt exemplarisch Fig. 12.

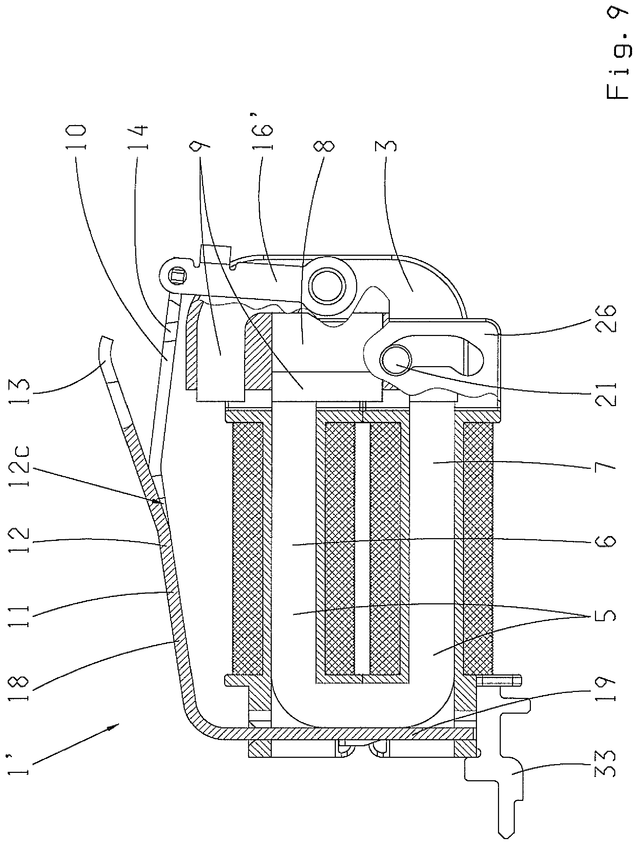

Bei der Ausführungsform gemäß Fig. 8 und 9 ist der erste 10 und zweite 11 mechanische Energiespeicher wiederum mittels eines Federelements 12 gebildet, vorliegend einem L-förmigen Federelement 12. Das Federelement 12 ist wie bei der zuvor geschilderten Ausführungsform zur Krafteinleitung bei Betätigung vorgesehen, wobei es z.B. ein integral gebildetes Krafteinleitungselement 13 als Betätigungselement des Induktionsgenerators 1' ausbildet. Das Krafteinleitungselement 13 kann darüber hinaus separat von dem Federelement 12 gebildet sein.

Das Federelement 12 weist wiederum einen zweiten Abschnitt 18 auf, welcher an einem dem Magnetelement 3 abgewandten Längsende der Induktionsspule 4 abgestützt bzw. fixiert ist. Der gegenüberliegende, zur Verbindung mit dem Magnetelement 3 vorgesehene erste Abschnitt bzw. das erste Federelement 14, entsprechend dem ersten mechanischen Energiespeicher 10, ist hierbei zur Gelenkverbindung mit einem Verbindungselement 16' ausgebildet, welches wiederum zur gelenkigen Verbindung mit dem Magnetelement 3 vorgesehen ist. Durch eine solche Verbindung kann reibungsarm eine zur Bewegung einzuleitende Kraft in Verlagerungsrichtung bzw. Rückverlagerungsrichtung auf das Magnetelement 3 übertragen werden, jedoch kein Drehmoment.

Das dem Magnetelement 3 zugewandte Ende des ersten Abschnitts des Federelements 12 ist zur Gelenkverbindung mit dem Verbindungselement 16' ausgebildet, wobei es z.B. zwei in Querrichtung abstehende Anlenkelemente 27 in z.B. Form von Vorsprüngen aufweist, welche jeweils mit einem korrespondierenden Anlenkelement 28 eines Verbindungselements 16' drehbeweglich zusammenwirken, z.B. jeweils mit einer ersten Aufnahmeöffnung. Das Verbindungselement 16' ist dabei zum Beispiel mittels mindestens eines Arms 17', z.B. zweier Arme 17', gebildet, welche durch einen Steg fest miteinander verbunden sind. Am zur Verbindung mit dem Magnetelement 3 vorgesehenen Ende des Verbindungselements 16' ist ein weiteres Anlenkelement 29 vorgesehen, um eine weitere Gelenkverbindung mit einem Anlenkelement 30 des Magnetelements 3 einzugehen. Dazu bildet z.B. ein unteres Ende der Arme 17' jeweils eine zweite Aufnahmeöffnung aus, mittels welcher jeweils ein korrespondierendes Anlenkelement 30 des Magnetelements 3 gelenkverbunden in Eingriff gebracht ist.

Bei einer Betätigung wird das Magnetelement 3 des Induktionsgenerators 1' ansonsten auf oben beschriebene Weise in die Zwischenstellung gebracht und ab Erreichen der Zwischenstellung mittels der im ersten mechanischen Energiespeicher 10 bzw. dem ersten Abschnitt des Federelements 12 gespeicherten Energie mechanisch beschleunigt in die jeweils andere Ruhestellung Y1, Y2 verbracht. Dazu wird auf obige Ausführungen zu dem Induktionsgenerator 1, insbesondere zur Funktionalität des Induktionsgenerators 1, verwiesen.

Erfindungsgemäß lassen sich durch Verwendung unterschiedlicher Kontursteuerungen bzw. unterschiedlicher Steuerprofile 20 auf einfache Weise verschiedene Induktionsgeneratoren 1, 1' bilden, i.e. verschiedener Funktionalität. Der Induktionsgenerator 1, 1' kann generell bistabil mit zwei stabilen Ruhestellungen Y1, Y2, monostabil mit einer Ruheposition (selbstrückschaltender Taster, i.e.), multistabil mit mehr als zwei Ruhepositionen oder auch metastabil (stabil gegen kleine Änderungen, aber instabil gegenüber größeren Änderungen) ausgeführt werden.

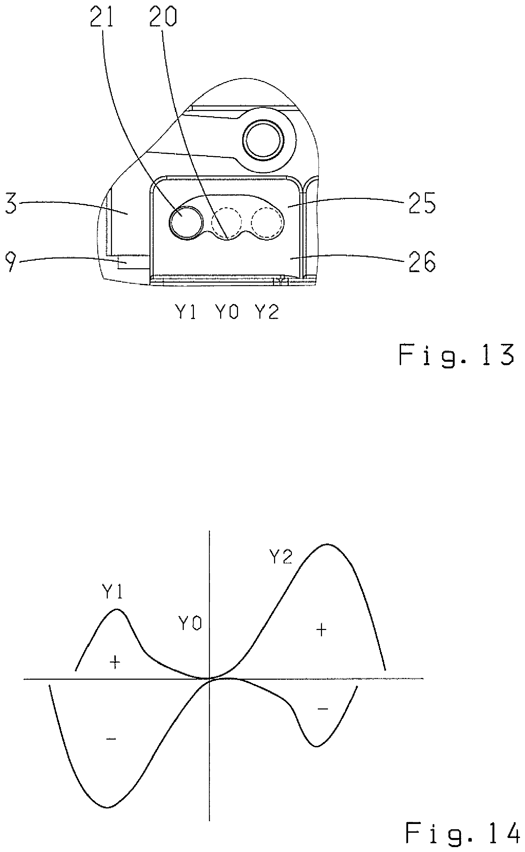

Fig. 13 zeigt ein Beispiel einer Kontursteuerung, mittels deren Steuerprofil 20 ein metastabiler Funkschalter 2 bildbar ist. Sowohl mittels der ersten als auch der zweiten beschriebenen Ausführungsform eines Induktionsgenerators 1, 1' ist jeweils ein metastabiler Funkschalter 2 bildbar. Dazu wird z.B. das Steuerprofil 20 dahingehend angepasst, dass zusätzlich zu den beiden stabilen Ruhestellungen Y1, Y2 eine metastabile Stellung Y0 während des Bewegungswegs vorgesehen ist, i.e. eine Stellung, welche vorübergehend eingenommen werden kann, Fig. 14. Die weitere, metastabile Stellung Y0 ist entlang des Bewegungswegs zwischen der ersten und zweiten Ruhestellung Y1, Y2 gebildet.

Im Zuge einer Bewegung von einer in die andere Ruhestellung Y1, Y2 werden generell zwei elektrische Signale bzw. Impulse erzeugt. Ein erstes Signal wird bei Unterbrechen des Magnetkreises erzeugt, ein weiteres bei einem Schließen des Magnetkreises, einhergehend mit einer Umpolung des Spulenkerns 5. Die erzeugte Spannung bzw. Energie ist dabei von der Änderungsgeschwindigkeit des Magnetflusses abhängig.

Infolge einer aufgrund des Massenträgheitsgesetzes von der Schließgeschwindigkeit unterschiedlichen Unterbrechungsgeschwindigkeit, wird bei einem Öffnen des Magnetkreises infolge eines Außer-Anlage-Gelangens des Magnetelements 3 an den Schenkeln 6, 7 eine Energiemenge erzeugt, welche zu der infolge eines In-Anlage-Gelangens an den Schenkeln 6, 7, korrespondierend mit einem Schließen des Magnetkreises, unterschiedlich ist. Bei einem Öffnen ist die Energiemenge geringer als bei einem Schließen des Magnetkreises. Mittels der metastabilen Stellung Y0 können somit bis zu vier Signale detektiert werden, welche mit Hilfe der Polarität und der erzeugten Energiemenge unterscheidbar sind.

Der Induktionsgenerator 1, 1' ist erfindungsgemäß derart konzipiert, dass der Umschaltpunkt, entsprechend einer Bewegungseinleitung des Magnetelements 3, nur durch einen bestimmten Kraftbetrag, welcher im ersten Energiespeicher 10 bzw. im ersten Abschnitt 14 des Federelements 12, entsprechend z.B. der beiden Federarme 15, aufgebaut wird, bestimmt wird. Der Kraftbetrag kann dabei bedingt durch Fertigungstoleranzen an den Einzelteilen, oder durch unterschiedliche Magnetkräfte oder durch die Reibkraftstreuung schwanken, wodurch eine Schaltpunktungenauigkeit möglich wird.

Um die Schaltpunktgenauigkeit zu erhöhen, kann der Induktionsgenerator 1,1' derart ausgelegt werden, dass bei einer Betätigung auf einem definierten Weg, somit der Schaltpunkt, im ersten Energiespeicher 10 z.B. nur 90% der zum Umschalten erforderlichen Kraft gespeichert werden. Die letzten 10% der Kraft können durch eine Direktbetätigung des Magnetelementes 3 zugefügt werden.

Konstruktiv kann dies z.B. so realisiert werden, dass z.B. von dem Krafteinleitungselement 13, insbesondere einem oberen Ende, ein starrer Steg in die Richtung des Magnetelements 3 ausgebildet ist, der nach einem definierten Weg, korrespondierend mit einer elastischen Verformung des Federelements 12, direkt auf das Magnetelement 3 drückt und bei einer weiteren Betätigung dieses in Bewegung setzt, i.e. entlang der benachbarten Anschrägung 22.

Der erfindungsgemäße Induktionsgenerator 1, 1' kann eine mit dem Spulenkern 5 zusammenwirkende Induktionsspule 4 aufweisen oder zwei Induktionsspulen 4 (z.B. Fig. 1, 8), in welche jeweils ein Schenkel 6, 7 des U-förmigen Spulenkerns 5 derart eingebracht ist, dass das Magnetelement 3 an den Schenkelenden zur Anlage gelangen kann. Der erfindungsgemäß integral gebildete erste 10 und zweite 11 mechanische Energiespeicher in Form des Federelements 12, insbesondere in Form eines Federbügels, kann dabei dazu genutzt werden, das Magnetelement 3 mit der Induktionsspule 4 zu einem einstückig ausgebildeten Modul zusammenzufügen. Dazu wird der Federbügel sowohl an dem Magnetelement 3 als auch der Induktionsspule 4 fixiert. Das so gebildete Modul besteht ausschließlich aus dem Federbügel, der Induktionsspule 4 mit dem Spulenkern 5 und dem Magnetelement 3.

Der erfindungsgemäße Induktionsgenerator 1 kann zum Beispiel in einem Funkschalter 1 eingesetzt werden, welcher eine Senderbaugruppe 31 und eine Antennenbaugruppe 32 mit einer Antenne aufweist. Der Induktionsgenerator 1 ist dabei z.B. mittels eines Kontaktelements 33 zur Energieabgabe an die Senderbaugruppe 31 mit dieser elektrisch kontaktierend verbunden, z.B. steckverbunden. Der Induktionsgenerator 1 kann z.B. mittels eines Bedienelements 34 des Funkschalters 2, welches mit dem Krafteinleitungselement 13 zusammen wirkt, betätigt werden, i.e. durch Krafteinleitung in das Bedienelement 34 in Verlagerungsrichtung.

### Bezugszeichen

- 1, 1': Induktionsgenerator
- 2: Funkschalter
- 3: Magnetelement
- 4: Induktionsspule
- 5: U-förmiger Spulenkern
- 6: erster Schenkel
- 7: zweiter Schenkel
- 8: Dauermagnet
- 9: Polschuhe
- 10: erster mechanischer Energiespeicher
- 11: zweiter mechanischer Energiespeicher
- 12: Federelement
- 12a: erstes Bügelende
- 12b: zweites Bügelende
- 12c: Krafteinleitungsbereich
- 13: Krafteinleitungselement
- 14: erstes Federelement
- 14a: Endbereich
- 15: Federarm
- 16, 16': Verbindungselement
- 17, 17': Arm
- 18: zweites Federelement
- 18a: Endbereich
- 19: Abstützelement
- 20: Steuerprofil
- 21: Eingriffselement
- 22: erste Anschrägung
- 22a: Ende
- 23: zweite Anschrägung
- 23a: Ende
- 24: Anschlagselement
- 25: Steuerkurventräger
- 26: Steuerkäfig
- 27, 28, 29, 30: Anlenkelemente
- 31: Senderbaugruppe
- 32: Antennenbaugruppe
- 33: Kontaktelement
- 34: Bedienelement
- X: Verlagerungsrichtung
- Y: Rückverlagerungsrichtung

## Patentansprüche

1. Induktionsgenerator (1, 1') für einen Funkschalter (2), wobei der Induktionsgenerator (1, 1') ein Magnetelement (3), eine Induktionsspule (4) mit einem U-förmigen Spulenkern (5) und ein Federelement (12) zur Betätigung des Induktionsgenerators (1, 1') aufweist, wobei das Federelement (12) einen ersten mechanischen Energiespeicher (10) zur Speicherung von Betätigungsenergie ausbildet, welcher als ein blattförmiges Federelement oder eine Schraubenfeder ausgebildet und mit dem Magnetelement (3) wirkverbunden ist, wobei für das Magnetelement (3) eine erste (Y1) und eine zweite (Y2) Ruhestellung jeweils in Anlage an den Schenkeln (6, 7) des Spulenkerns (5) definiert ist, wobei in der ersten Ruhestellung (Y1) dem ersten Schenkel (6) ein Pol des Magnetelements (3) erster Polarität und dem zweiten Schenkel (7) ein Pol des Magnetelements (3) zweiter Polarität, der von der ersten Polarität verschieden ist, und in der zweiten Ruhestellung (Y2) dem ersten Schenkel (6) der Pol des Magnetelements (3) zweiter Polarität und dem zweiten Schenkel (7) der Pol des Magnetelements (3) erster Polarität gegenüberliegt, wodurch bei Wechsel zwischen den Ruhestellungen (Y1, Y2) jeweils eine Flussrichtungsumkehr im Spulenkern (5) erfolgt, **dadurch gekennzeichnet, dass** das Magnetelement (3) zur Umpolung des Spulenkerns (5) in einer Richtung relativ zu den Schenkeln (6, 7) verlagerbar an dem Induktionsgenerator (1, 1') angeordnet ist, in welcher die Schenkel (6, 7) zueinander benachbart sind, wobei ein Bewegungsweg für das Magnetelement (3) für eine Bewegung zwischen den Ruhestellungen (Y1, Y2) mittels einer Kurvensteuerung vorgegeben ist, welche mittels einem Steuerprofil (20) und einem entlang des Steuerprofils (20) geführten Eingriffselement (21) gebildet ist, wobei das Steuerprofil (20) zwischen der ersten (Y1) und der zweiten Ruhestellung (Y2) eine Stellung für das Magnetelement (3) definiert, welche als metastabile oder instabile Stellung ausgebildet ist, und dass sich der erste mechanische Energiespeicher (10) von einem Krafteinleitungsbereich (12c) des Federelements (12) in Richtung zu dem Magnetelement (3) erstreckt und im Zuge der Erzwingung einer Bewegung des Magnetelements (3) aus einer Ruhestellung (Y1, Y2) zunächst Energie speichert und diese nach Erreichen des Magnetelements (3) einer entlang des Bewegungswegs definierten Zwischenstellung, korrespondierend mit welcher die Magnetkräfte auf den Spulenkern (5) schlagartig nachlassen, zur mechanischen Beschleunigung der Verbringung des Magnetelements (3) in die jeweils andere Ruhestellung (Y2, Y1) nach Verlassen der Zwischenstellung an das Magnetelement (3) abgibt.

2. Induktionsgenerator (1) nach Anspruch 1, **dadurch gekennzeichnet, dass** das Steuerprofil (20) der Kurvensteuerung zur Vorgabe eines eine Auslenkung und eine Einlenkung ermöglichenden Bewegungswegs zwei aufeinander zu laufende Anschrägungen (22, 23) aufweist, zwischen welchen ein Extremwert oder ein Plateau gebildet ist, derart, dass ein Auslenken und ein Einlenken eines daran geführten Eingriffselements aus einer Ruhestellung (Y1, Y2) in die jeweils andere Ruhestellung (Y2, Y1) ermöglicht ist.

3. Induktionsgenerator (1) nach einem der vorhergehenden Ansprüche, **dadurch gekennzeichnet, dass** das Eingriffselement (21) mittels einer Vorspannkraft gegen das Steuerprofil (20) gedrängt ist.

4. Induktionsgenerator (1) nach einem der vorhergehenden Ansprüche, **dadurch gekennzeichnet, dass** das Steuerprofil (20) in einem als Steuerkäfig (26) gebildeten Steuerkurventräger (25) aufgenommen ist, wobei das Steuerprofil (20) insbesondere als Profilnut gebildet ist.

5. Induktionsgenerator (1) nach einem der vorhergehenden Ansprüche, **dadurch gekennzeichnet, dass** das Magnetelement (3) das Eingriffselement (21) aufweist, wobei die Induktionsspule (4) den Steuerkurventräger (25) aufweist, welcher das Steuerprofil (20) der Kurvensteuerung ausbildet, wobei das Eingriffselement (21) bei einer erzwungenen Bewegung entlang des Steuerprofils (20) zwischen den Ruhestellungen (Y1, Y2) geführt ist.

6. Induktionsgenerator (1) nach einem der vorhergehenden Ansprüche, **dadurch gekennzeichnet, dass** das Steuerprofil (20) zur Definition der ersten (Y1) und der zweiten (Y2) Ruhestellung jeweils ein Anschlagselement (24) aufweist, welches insbesondere jeweils zusammen mit einer Anschrägung (22, 23) des Steuerprofils (20) einen Rastsitz für das Eingriffselement (21) ausbildet.

7. Induktionsgenerator (1) nach einem der vorhergehenden Ansprüche, **dadurch gekennzeichnet, dass** das Federelement (12) als ein L-förmiges oder bügelförmiges Betätigungselement ausgebildet ist.

8. Induktionsgenerator (1) nach einem der vorhergehenden Ansprüche, **dadurch gekennzeichnet, dass** der erste mechanische Energiespeicher (10) in Form eines ersten Abschnitts (14) des Federelements (12) gebildet ist, welcher mit dem Magnetelement (3) mittels eines Verbindungselements (16) derart steif verbunden ist, dass ein Drehmoment und eine Kraft übertragbar sind, insbesondere mittels eines Arms (17), wobei mittels des Verbindungselements (16) eine Vorspannkraft auf das Magnetelement (3) einwirkt.

9. Induktionsgenerator (1) nach einem der vorhergehenden Ansprüche, **dadurch gekennzeichnet, dass** der erste mechanische Energiespeicher (10) in Form eines ersten Abschnitts (14) des Federelements (12) gebildet ist, an welchem ein mit dem Magnetelement (3) verbundenes, insbesondere gelenkverbundenes, Verbindungselement (16') angelenkt ist, derart, dass eine Kraft auf das Magnetelement (3) übertragbar ist.

10. Induktionsgenerator (1) nach einem der vorhergehenden Ansprüche, **dadurch gekennzeichnet, dass** der Induktionsgenerator (1) einen zweiten mechanischen Energiespeicher (11) aufweist, welcher korrespondierend mit der Bewegung des Magnetelements (3) von der ersten Ausgangsruhestellung (Y1) in die zweite Ruhestellung (Y2) kontinuierlich zunehmend Betätigungsenergie zur Erzeugung einer Rückstellkraft speichert, welche zur Erzwingung einer Bewegung des Magnetelements (3) in umgekehrter Richtung freisetzbar ist, wobei der zweite mechanische Energiespeicher (11) als ein blattförmiges Federelement oder eine Schraubenfeder ausgebildet ist.

11. Induktionsgenerator (1) nach Anspruch 10, **dadurch gekennzeichnet, dass** der zweite mechanische Energiespeicher (11) integral mit dem ersten mechanischen Energiespeicher (10) gebildet ist.

12. Induktionsgenerator (1) nach einem der Ansprüche 10 oder 11, **dadurch gekennzeichnet, dass** der erste mechanische Energiespeicher (10) als mindestens ein Federarm (15) gebildet ist, und dass sich der zweite mechanische Energiespeicher (11), welcher insbesondere als blattförmiges Federelement gebildet ist, von dem Krafteinleitungsbereich (12c) des Federelements (12) in Richtung zu einem dem Magnetelement (3) abgewandten Längsende der Induktionsspule (4) erstreckt.

13. Induktionsgenerator (1) nach einem der Ansprüche 10 bis 12, **dadurch gekennzeichnet, dass** das Federelement (12) mittels des zweiten Energiespeichers (11) an der Induktionsspule (4) abgestützt ist sowie mittels des ersten Energiespeichers (10) mit dem Magnetelement (3) zur Kraftübertragung verbunden ist.

14. Induktionsgenerator (1) nach einem der vorhergehenden Ansprüche, **dadurch gekennzeichnet, dass** mittels der gespeicherten Energie des ersten mechanischen Energiespeichers (10) zur mechanischen Beschleunigung der Verbringung des Magnetelements (3) eine Kraft auf das Magnetelement (3) ausübbar ist, insbesondere mittels eines ersten Abschnitts (14) des Federelements (12), wobei die Kraft in einer Richtung wirkt, in welcher die Schenkel (6, 7) zueinander benachbart sind.

15. Funkschalter (2) mit einer Senderbaugruppe (22) und einer Antenne, **dadurch gekennzeichnet, dass** der Funkschalter (2) einen Induktionsgenerator (1) nach einem der vorhergehenden Ansprüche aufweist.

## Claims

1. Induction generator (1, 1') for a radio-operated switch (2), wherein the induction generator (1, 1') has a magnet element (3), an induction coil (4) with a U-shaped coil core (5), and a spring element (12) for operating the induction generator (1, 1'), wherein the spring element (12) forms a first mechanical energy store (10) for storing operating energy, which first mechanical energy store is designed as a leaf-like spring element or a helical spring and is operatively connected to the magnet element (3), wherein a first rest position (Y1) and a second rest position (Y2) respectively bearing against the limbs (6, 7) of the coil core (5) are defined for the magnet element (3), wherein, in the first rest position (Y1), a pole of the magnet element (3) of first polarity is situated opposite the first limb (6) and a pole of the magnet element (3) of second polarity, which is different from the first polarity, is situated opposite the second limb (7) and, in the second rest position (Y2), the pole of the magnet element (3) of second polarity is situated opposite the first limb (6) and the pole of the magnet element (3) of first polarity is situated opposite the second limb (7), as a result of which a reversal in flow direction respectively takes place in the coil core (5) in the event of a changeover between the rest positions (Y1, Y2), **characterized in that** the magnet element (3), for reversing the polarity of the coil core (5), is arranged on the induction generator (1, 1') such that it can be displaced relative to the limbs (6, 7) in a direction in which the limbs (6, 7) are adjacent to one another, wherein a movement path for the magnet element (3) for a movement between the rest positions (Y1, Y2) is prespecified by means of a cam controller which is formed by means of a control profile (20) and an engagement element (21) which is guided along the control profile (20), wherein the control profile (20), between the first rest position (Y1) and the second rest position (Y2), defines a position for the magnet element (3), which position is designed as a metastable or unstable position, and **in that** the first mechanical energy store (10) extends from a force introduction region (12c) of the spring element (12) in the direction of the magnet element (3) and in the course of forcing a movement of the magnet element (3) from a rest position (Y1, Y2) initially stores energy and outputs said energy to the magnet element (3) after the magnet element (3) reaches an intermediate position which is defined along the movement path, corresponding to which the magnetic forces on the coil core (5) suddenly drop, for mechanically accelerating the movement of the magnet element (3) to the respectively other rest position (Y2, Y1) after leaving the intermediate position.

2. Induction generator (1) according to Claim 1, **characterized in that** the control profile (20) of the cam controller for prespecifying a movement path which renders possible a steering-out operation and a steering-in operation has two bevels (22, 23) which run towards one another and between which an extreme value or a plateau is formed in such a way that steering-out and steering-in of an engagement element, which is guided thereon, from a rest position (Y1, Y2) to the respectively other rest position (Y1, Y2) is rendered possible.

3. Induction generator (1) according to either of the preceding claims, **characterized in that** the engagement element (21) is pushed against the control profile (20) by means of a prestressing force.

4. Induction generator (1) according to one of the preceding claims, **characterized in that** the control profile (20) is received in a control cam carrier (25) which is formed as a control cage (26), wherein the control profile (20) is formed, in particular, as a profiled groove.

5. Induction generator (1) according to one of the preceding claims, **characterized in that** the magnet element (3) has the engagement element (21), wherein the induction coil (4) has the control cam carrier (25) which forms the control profile (20) of the cam controller, wherein the engagement element (21) is guided between the rest positions (Y1, Y2) in the event of a forced movement along the control profile (20).

6. Induction generator (1) according to one of the preceding claims, **characterized in that** the control profile (20), for defining the first rest position (Y1) and the second rest position (Y2), respectively has a stop element (24) which, in particular in each case together with a bevel (22, 23) of the control profile (20), forms a latching seat for the engagement element (21) .

7. Induction generator (1) according to one of the preceding claims, **characterized in that** the spring element (12) is designed as an L-shaped or bow-shaped operating element.

8. Induction generator (1) according to one of the preceding claims, **characterized in that** the first mechanical energy store (10) is formed in the form of a first section (14) of the spring element (12), which first section is rigidly connected to the magnet element (3) by means of a connecting element (16) in such a way that a torque and a force can be transmitted, in particular by means of an arm (17), wherein a prestressing force acts on the magnet element (3) by means of the connecting element (16).

9. Induction generator (1) according to one of the preceding claims, **characterized in that** the first mechanical energy store (10) is formed in the form of a first section (14) of the spring element (12) to which a connecting element (16'), which is connected, in particular connected by a joint, to the magnet element (3), is connected in an articulated manner in such a way that a force can be transmitted to the magnet element (3) .

10. Induction generator (1) according to one of the preceding claims, **characterized in that** the induction generator (1) has a second mechanical energy store (11) which, corresponding to the movement of the magnet element (3) from the first starting rest position (Y1) to the second rest position (Y2), continuously increasingly stores operating energy for generating a restoring force which can be released for forcing a movement of the magnet element (3) in the opposite direction, wherein the second mechanical energy store (11) is designed as a leaf-like spring element or a helical spring.

11. Induction generator (1) according to Claim 10, **characterized in that** the second mechanical energy store (11) is integrally formed with the first mechanical energy store (10).

12. Induction generator (1) according to either of Claims 10 and 11, **characterized in that** the first mechanical energy store (10) is formed as at least one spring arm (15), and **in that** the second mechanical energy store (11), which is formed as a leaf-like spring element in particular, extends from the force introduction region (12c) of the spring element (12) in the direction of a longitudinal end of the induction coil (4), which longitudinal end is averted from the magnet element (3).

13. Induction generator (1) according to one of Claims 10 to 12, **characterized in that** the spring element (12) is supported on the induction coil (4) by means of the second energy store (11) and also is connected to the magnet element (3) for force transmission by means of the first energy store (10).

14. Induction generator (1) according to one of the preceding claims, **characterized in that** a force can be exerted on the magnet element (3) by means of the stored energy of the first mechanical energy store (10) for mechanically accelerating the movement of the magnet element (3), in particular by means of a first section (14) of the spring element (12), wherein the force acts in a direction in which the limbs (6, 7) are adjacent to one another.

15. Radio-operated switch (2) comprising a transmitter assembly (22) and an antenna, **characterized in that** the radio-operated switch (2) has an induction generator (1) according to one of the preceding claims.

## Revendications

1. Générateur à induction (1, 1') destiné à un commutateur radio (2), le générateur à induction (1, 1') comportant un élément magnétique (3), une bobine d'induction (4) pourvue d'un noyau de bobine (5) en forme de U et un élément à ressort (12) destiné à actionner le générateur à induction (1, 1'), l'élément à ressort (12) formant un premier accumulateur d'énergie mécanique (10) destiné à stocker de l'énergie d'actionnement, conçu sous la forme d'un élément à ressort en forme de lame ou d'un ressort hélicoïdal et relié fonctionnellement à l'élément magnétique (3), des première (Y1) et deuxième (Y2) positions de repos étant définies, pour l'élément magnétique (3), respectivement en appui sur les branches (6, 7) du noyau de bobine (5), dans la première position de repos (Y1) un pôle de première polarité de l'élément magnétique (3) étant opposé à la première branche (6) et un pôle de deuxième polarité, différente de la première polarité, de l'élément magnétique (3) étant opposé à la deuxième branche (7), et dans la deuxième position de repos (Y2) le pôle de deuxième polarité de l'élément magnétique (3) étant opposé à la première branche (6) et le pôle de première polarité de l'élément magnétique (3) étant opposé à la deuxième branche (7) de sorte qu'aucune inversion de direction de flux dans le noyau de bobine (5) n'est effectuée lors du changement entre les positions de repos (Y1, Y2), **caractérisé en ce que** l'élément magnétique (3) destiné à inverser la polarité du noyau de bobine (5) est disposé de manière déplaçable sur le générateur à induction (1, 1') par rapport aux branches (6, 7) dans une direction dans laquelle les branches (6, 7) sont adjacentes l'une à l'autre, un chemin de déplacement de l'élément magnétique (3) étant spécifié pour un déplacement entre les positions de repos (Y1, Y2) au moyen d'une commande à came qui est formée par un profilé de commande (20) et un élément d'engagement (21) guidé le long du profilé de commande (20), le profilé de commande (20) définissant entre les première (Y1) et deuxième positions de repos (Y2) une position de l'élément magnétique (3) qui est conçue comme une position métastable ou instable, et **en ce que** le premier accumulateur d'énergie mécanique (10) s'étend depuis une région d'introduction de force (12c) de l'élément à ressort (12) en direction de l'élément magnétique (3) et stocke tout d'abord de l'énergie au cours du mouvement forcé de l'élément magnétique (3) depuis une position de repos (Y1, Y2) et délivre cette énergie à l'élément magnétique (3), après que l'élément magnétique (3) a atteint une position intermédiaire définie le long du chemin de déplacement, ce qui correspond à une brusque diminution des forces magnétiques exercées sur le noyau de bobine (5), afin d'accélérer mécaniquement le passage de l'élément magnétique (3) dans l'autre position de repos (Y2, Y1) après avoir quitté la position intermédiaire.

2. Générateur à induction (1) selon la revendication 1, **caractérisé en ce que**, pour spécifier un chemin de déplacement permettant une sortie et une rentrée, le profilé de commande (20) de la commande à came comporte deux chanfreins (22, 23) qui s'étendent en direction l'un de l'autre et entre lesquels une valeur extrême ou un plateau est formé de façon à permettre une sortie et une rentrée d'un élément d'engagement, guidé sur ceux-ci, depuis une position de repos (Y1, Y2) dans l'autre position de repos (Y2, Y1).

3. Générateur à induction (1) selon l'une des revendications précédentes, **caractérisé en ce que** l'élément d'engagement (21) est pressé contre le profilé de commande (20) au moyen d'une force de précontrainte.

4. Générateur à induction (1) selon l'une des revendications précédentes, **caractérisé en ce que** le profilé de commande (20) est reçu dans un support de came de commande (25) réalisé sous la forme d'une cage de commande (26), le profilé de commande (20) étant formé notamment comme une rainure de profilé

5. Générateur à induction (1) selon l'une des revendications précédentes, **caractérisé en ce que** l'élément magnétique (3) comporte l'élément d'engagement (21), la bobine d'induction (4) comportant le support de came de commande (25) qui forme le profilé de commande (20) de la commande à came, l'élément d'engagement (21) étant guidé entre les positions de repos (Y1, Y2) dans un mouvement forcé le long du profilé de commande (20).

6. Générateur à induction (1) selon l'une des revendications précédentes, **caractérisé en ce que**, pour définir les première (Y1) et deuxième (Y2) positions de repos, le profilé de commande (20) comporte à chaque fois un élément de butée (24) qui forme, en particulier conjointement avec un chanfrein (22, 23) du profilé de commande (20), un ajustement à encliquetage pour l'élément d'engagement (21).

7. Générateur à induction (1) selon l'une des revendications précédentes, **caractérisé en ce que** l'élément à ressort (12) est conçu comme un élément d'actionnement en forme de L ou en forme d'étrier.

8. Générateur à induction (1) selon l'une des revendications précédentes, **caractérisé en ce que** le premier accumulateur d'énergie mécanique (10) se présente sous la forme d'une première portion (14) de l'élément à ressort (12) qui est relié rigidement à l'élément magnétique (3) à l'aide d'un élément de liaison (16) de manière à transmettre un couple et une force, notamment au moyen d'un bras (17), une force de précontrainte agissant sur l'élément magnétique (3) au moyen de l'élément de liaison (16).

9. Générateur à induction (1) selon l'une des revendications précédentes, **caractérisé en ce que** le premier accumulateur d'énergie mécanique (10) se présente sous la forme d'une première portion (14) de l'élément à ressort (12) sur laquelle est articulé un élément de liaison (16') relié à l'élément magnétique (3), en particulier relié par une articulation, de manière à pouvoir transférer une force à l'élément magnétique (3).

10. Générateur à induction (1) selon l'une des revendications précédentes, **caractérisé en ce que** le générateur à induction (1) comporte un deuxième accumulateur d'énergie mécanique (11) qui stocke, en correspondance du déplacement de l'élément magnétique (3) depuis la première position de repos (Y1) dans la deuxième position de repos (Y2), une énergie de plus en plus importante pour générer une force de rappel qui peut être libérée pour forcer le déplacement de l'élément magnétique (3) dans le sens contraire, le deuxième accumulateur d'énergie mécanique (11) étant conçu sous la forme d'un élément à ressort en forme de lame ou d'un ressort hélicoïdal.

11. Générateur à induction (1) selon la revendication 10, **caractérisé en ce que** le deuxième accumulateur d'énergie mécanique (11) est formé solidairement du premier accumulateur d'énergie mécanique (10).

12. Générateur à induction (1) selon l'une des revendications 10 et 11, **caractérisé en ce que** le premier accumulateur d'énergie mécanique (10) est réalisé sous la forme d'au moins un bras à ressort (15), et **en ce que** le deuxième accumulateur d'énergie mécanique (11), qui est réalisé notamment sous la forme de l'élément à ressort en forme de lame, s'étend depuis la région d'introduction de force (12c) de l'élément à ressort (12) en direction d'une extrémité longitudinale de la bobine d'induction (4) qui est opposée à élément magnétique (3).

13. Générateur à induction (1) selon l'une des revendications 10 à 12, **caractérisé en ce que** l'élément à ressort (12) est supporté par la bobine d'induction (4) au moyen du deuxième accumulateur d'énergie (11) et est relié en transmission de force à l'élément magnétique (3) au moyen du premier accumulateur d'énergie (10).

14. Générateur à induction (1) selon l'une des revendications précédentes, **caractérisé en ce qu'**une force peut être exercée sur l'élément magnétique (3) au moyen de l'énergie stockée du premier accumulateur d'énergie mécanique (10), notamment au moyen d'une première portion (14) de l'élément à ressort (12), pour accélérer mécaniquement le passage de l'élément magnétique (3), la force agissant dans une direction dans laquelle les branches (6, 7) sont adjacentes l'une à l'autre.

15. Commutateur radio (2) comprenant un module émetteur (22) et une antenne, **caractérisé en ce que** le commutateur radio (2) comprend un générateur à induction (1) selon l'une des revendications précédentes.
